# EUROPÄISCHE PATENTANMELDUNG

(11) **EP 2 784 347 A1**
(43) Veröffentlichungstag der Anmeldung: **01.10.2014**
(21) Anmeldenummer: 13001506.8
(22) Anmeldetag: 25.03.2013
(51) Int. Cl.: F16H 1/32

(54) **Getriebe**

(71) Anmelder: Spinea s.r.o., 08005 Presov (SK)
(72) Erfinder: Fecko, Tibor, 08001 Presov (SK)
(74) Vertreter: Jeck, Anton

(57) **Zusammenfassung**

Es wird ein Getriebe beschrieben. Dieses umfasst ein Gehäuse (02) mit einer konzentrisch um eine Zylinderachse (20) angeordneten, zylinderförmigen Gehäuseinnenwand (21), welche mit einer Innenverzahnung (22) versehen ist. Ferner umfasst es eine um die Zylinderachse (20) drehbar gelagerte Eingangswelle (03) mit mindestens zwei gleichmäßig um die Längsachse (30) der Eingangswelle (03) verdreht angeordneten Exzenterabschnitten (31) gleicher Exzentrizität (32). Darüber hinaus umfasst es eine um die Zylinderachse (20) drehbar gelagerte Ausgangswelle (04), wobei die Längsachsen (30, 40) der Eingangswelle (03) und der Ausgangswelle (04) mit der Zylinderachse (20) übereinstimmen. Außerdem umfasst es mindestens zwei Zykloidenscheiben (05, 06, 07), von denen jede Zykloidenscheibe (05, 06, 07) um eine eigene, zentrale Drehachse (50, 60, 70) drehbar auf einem Exzenterabschnitt (31) angeordnet ist und über eine mit der Innenverzahnung (22) kämmende Außenverzahnung (51, 61, 71) verfügt, wobei die Drehachse (50, 60, 70) jeder Zykloidenscheibe (05, 06, 07) um die Exzentrizität (32) zur Zylinderachse (20) versetzt ist, wobei der Durchmesser der Zykloidenscheiben (05, 06, 07) so bemessen ist, dass deren Außenverzahnung (51, 61, 71) in einer Richtung mit der Innenverzahnung (22) in Eingriff kommt, in welche Richtung der Exzenterabschnitt (31), auf dem eine Zykloidenscheibe (05, 06, 07) angeordnet ist, momentan weist, wohingegen in der entgegengesetzten Richtung die Außenverzahnung (51, 61, 71) frei von einem Eingriff mit der Innenverzahnung (22) ist, und wobei die Zykloidenscheiben (05, 06, 07) jeweils Referenzflächen (53, 63) aufweisen. Zusätzlich umfasst es mindestens ein um die Zylinderachse (20) drehbar gelagertes Ausgangsorgan (08), welches mit einer oder mehreren Referenzflächen (53, 63) wenigstens einer Zykloidenscheibe (05, 06, 07) in derartiger Wirkverbindung steht, dass die Bewegungen einer oder mehrerer Zykloidenscheiben (05, 06, 07) bei deren Abwälzung im Gehäuse (02) in eine Rotationsbewegung der Ausgangswelle (04) umgewandelt werden. Das Getriebe (01) zeichnet sich durch ein gerades Übersetzungsverhältnis aus. Die Außenverzahnungen (51, 61, 71) der Zykloidenscheiben (05, 06, 07) weisen jeweils eine gerade Zähnezahl auf.

## Beschreibung

Die Erfindung betrifft ein einstufiges Getriebe gemäß dem Oberbegriff des Anspruchs 1.

Ein einstufiges Getriebe, vorzugsweise Zykloidengetriebe, umfasst eine oder mehrere jeweils versetzt zueinander vermittels einer mit einer entsprechenden Anzahl gleichmäßig zueinander verdreht angeordneter Exzenter versehenen Eingangswelle exzentrisch angetriebene Zykloidenscheiben, die in einem Gehäuse abwälzen. Eine Zykloidenscheibe kann beispielsweise als ein Zahnrad mit einer Außenverzahnung oder als eine Kurvenscheibe ausgeführt sein. Der Kontakt zwischen dem Gehäuse und einer Zykloidenscheibe kann beispielsweise vermittels einer Innenverzahnung ebenfalls mit Zähnen oder über Rollen- und/oder Kugellager hergestellt sein. Ein Ausgangsorgen wandelt die Bewegungen der einen oder mehreren Zykloidenscheiben bei deren Abwälzung im Gehäuse in eine Rotationsbewegung einer Ausgangswelle um. Das Ausgangsorgan kann hierzu mit der Ausgangswelle verbunden sein, diese umfassen oder von dieser umfasst sein. Das Ausgangsorgan steht dabei zur Umwandlung der Bewegungen der mindestens einen Zykloidenscheibe mit einer oder mehreren Referenzflächen der wenigstens einen Zykloidenscheibe in Wirkverbindung, beispielsweise an einer Zykloidenscheibe angeordnete Führungsbahnen und/oder Vorsprünge und/oder Nuten und/oder außermittige Durchgangsöffnungen, um nur einige denkbare Ausgestaltungen zu nennen. Dabei können Wälzlager und/oder Wälzelemente zwischen dem Ausgangsorgan und den Referenzflächen vorgesehen sein.

Eingangs- und Ausgangswelle können dabei vertauscht werden, da Getriebe nicht selbsthemmend wirken.

Der Einfachheit halber wird im Nachfolgenden zur Erläuterung des Prinzips der Begriff Zahn stellvertretend für alle denkbaren Ausgestaltungen des Kontakts zwischen Zykloidenscheibe und Gehäuse verwendet.

Ein Exzenter eines Getriebes treibt eine Zykloidenscheibe mit n Zähnen an, die sich in einem fest stehenden Gehäuse mit n+1 Zähnen abwälzt. Die Zykloidenscheibe wälzt sich dabei über die Zähne des Gehäuses ab. Je Umdrehung der Eingangswelle und damit des Exzenters bewegt sich die Zykloidenscheibe und mit ihr die Ausgangswelle um einen Zahn weiter. So entstehen kleinere Drehzahlen entgegen der Drehrichtung der Eingangswelle. Das Übersetzungsverhältnis i, für welches i=n/((n+1)-n) gilt, entspricht dabei der Anzahl n der Zähne der Zykloidenscheibe.

Um eine hohe Leistungsdichte einhergehend mit einer stets gleichmäßigen Massenverteilung zu erhalten, ist bekannt, Getriebe mit zwei oder mehr stets gleichmäßig um die Eingangswelle verteilt angeordneten Exzentern und einer der Anzahl der Exzenter entsprechenden Anzahl von Zykloidenscheiben auszuführen. Dadurch können auch hohe Drehzahlen und hohe Kraftübertragungen, entsprechend hohe Leistungen bewältigt werden.

Um eine über einen vollen Durchlauf eines Getriebes entsprechend einer vollen Umdrehung der Ausgangswelle stets gleichmäßige Massenverteilung durch eine gleichmäßig um die Eingangswelle verteilte Anordnung von zwei oder mehr Zykloidenscheiben zu ermöglichen, sind eine gerade Anzahl von Zähnen im fest stehenden Gehäuse notwendig.

Einstufige Getriebe mit zwei oder mehr gleichmäßig um die Eingangswelle verteilt angeordneten Zykloidenscheiben weisen damit ein ungerades Übersetzungsverhältnis auf.

Dies erhöht die Komplexität der Steuerung eines Antriebs eines einstufigen Getriebes mit zwei oder mehr gleichmäßig um die Eingangswelle verdreht angeordneten Zykloidenscheiben sowie der Berechnung der Voreinstellung der Drehung der Ausgangswelle, einhergehend mit einer im Vergleich zu einem geraden Übersetzungsverhältnis verringerten Genauigkeit der Steuerung und der Berechnung.

Dadurch sind solche Getriebe nur eingeschränkt in Verbindung beispielsweise mit Stellantrieben nutzbar, bei denen zum Erhalt eines eindeutigen Verhältnisses zwischen Eingangsumdrehungen und Ausgangsumdrehungen eines Getriebes ein gerades Übersetzungsverhältnis bevorzugt wird.

Bei einem solchen einstufigen Getriebe mit zwei oder mehr gleichmäßig um die Eingangswelle verdreht angeordneten Zykloidenscheiben kann die Herstellung und Überprüfung der Einhaltung einer vorgegebenen Geometrie der beispielsweise durch vorzugsweise Wälzelemente, wie etwa drehbare Bolzen, und dazwischenliegende Nuten gebildeten Zähne im Gehäuse besonders einfach erfolgen, weil die Zähne jeweils um 180° gegenüberliegend angeordnet sind. Darüber hinaus weisen alle Referenzflächen der Zykloidenscheiben die selbe Ausrichtung, den selben Abstand und die selbe Drehlage gegenüber den Zähnen am Umfang der Zykloidenscheiben auf. Dadurch werden die Zykloidenscheiben zum Erhalt einer hohen Präzision als Einheit in einer Gruppe hergestellt.

Zum Erhalt eines geraden Übersetzungsgetriebes ist bekannt, ein einstufiges Getriebe mit einem weiteren Getriebe zu einem zwei- oder mehrstufigen Getriebe mit geradem Übersetzungsverhältnis zu kombinieren. So ist beispielsweise bekannt, einem einstufigen Getriebe ein Stirnradgetriebe vorzuschalten oder ein einstufiges Stirnradgetriebe in ein einstufiges Getriebe zu integrieren, so dass sich als Produkt des ungeraden Übersetzungsverhältnisses des einstufigen Getriebes und des Übersetzungsverhältnisses des beispielsweise vorgeschalteten Getriebes ein gerades Übersetzungsverhältnis ergibt.

Es ist ersichtlich, dass sich durch eine Kombination eines einstufigen Getriebes mit einem weiteren Getriebe zum Erhalt eines geraden Übersetzungsverhältnisses erhebliche Einschränkungen hinsichtlich Bauraumbedarf, Herstellungs- und Kostenaufwand sowie Komplexität des Aufbaus des zusammengesetzten Getriebes ergeben.

Durch DE 612 777 ist ein einstufiges Zykloidengetriebe mit zwei oder mehr gleichmäßig um die Eingangswelle verdreht angeordneten und gleich ausgebildeten Zykloidenscheiben bekannt.

Durch EP 1 046 456 A1 ist ein Hydraulikmotor bekannt, der entsprechend eines einstufigen Getriebes mit einer Zykloidenscheibe ausgebildet ist. Die Zykloidenscheibe weist dabei eine gerade Anzahl von Zähnen an dessen Außenumfang und ein Gehäuse eine um eins höhere, ungerade Anzahl von Zähnen an dessen Innenumfang auf.

Der Erfindung liegt die Aufgabe zu Grunde, ein einstufiges Getriebe mit zwei oder mehr gleichmäßig um die Eingangswelle verdreht angeordneten Zykloidenscheiben zu entwickeln, welches ein eindeutiges Verhältnis zwischen Eingangsumdrehungen und Ausgangsumdrehungen aufweist.

Die Aufgabe wird gelöst mit den Merkmalen des Anspruchs1

Man erkennt, dass die Erfindung jedenfalls dann verwirklicht ist, wenn es sich um ein Getriebe handelt, das über ein Gehäuse verfügt. Das Gehäuse hat eine konzentrisch um eine Zylinderachse angeordnete zylinderförmige Gehäuseinnenwand. Die Gehäuseinnenwand ist mit einer Innenverzahnung versehen, deren Zähne sich parallel oder schräg zur Zylinderachse erstrecken. In dem oder am Gehäuse ist eine Eingangswelle drehbar gelagert.

Die Eingangswelle weist zwei oder mehreren, einzeln oder gruppenweise, beispielsweise paarweise gleichmäßig um die Längsachse der Eingangswelle verdreht angeordneten Exzenterabschnitte auf. Alle Exzenterabschnitte weisen die gleiche Exzentrizität auf.

In dem oder am Gehäuse ist eine Ausgangswelle drehbar gelagert. Die Längsachsen der Eingangswelle und der Ausgangswelle stimmen mit der Zylinderachse überein.

Das Getriebe verfügt darüber hinaus über mindestens zwei Zykloidenscheiben. Jede Zykloidenscheibe ist um eine eigene, zentrale Drehachse drehbar auf einem Exzenterabschnitt der Eingangswelle angeordnet. Die Drehachse jeder Zykloidenscheibe ist dabei um die Exzentrizität der Exzenterabschnitte zur Zylinderachse versetzt. Auf jedem Exzenterabschnitt der Eingangswelle ist dieselbe Anzahl von Zykloidenscheiben drehbar angeordnet. Vorzugsweise ist auf jedem Exzenterabschnitt jeweils eine Zykloidenscheibe drehbar angeordnet.

Die Zykloidenscheiben verfügen jeweils über eine mit der Innenverzahnung der zylinderförmigen Gehäuseinnenwand kämmende Außenverzahnung. Der Durchmesser der Zykloidenscheiben ist dabei so bemessen, dass deren Außenverzahnung in einer Richtung mit der Innenverzahnung der zylinderförmigen Gehäuseinnenwand kämmend in Eingriff kommt, in welche Richtung der Exzenter, auf dem eine Zykloidenscheibe angeordnet ist, momentan weist, wohingegen in der entgegengesetzten Richtung die Außenverzahnung frei von einem Eingriff mit der Innenverzahnung der zylinderförmigen Gehäuseinnenwand ist. Dadurch können die Zykloidenscheiben auf der Gehäuseinnenwand abwälzen.

Die Zykloidenscheiben weisen an oder in zumindest einer ihrer normal zu deren Drehachse verlaufenden Stirnseiten jeweils Referenzflächen auf. Eine oder mehrere Referenzflächen können beispielsweise auf, an oder in einer oder beiden Stirnflächen einer Zykloidenscheibe angeordnete, normal zur Drehachse radial verlaufende Führungsbahnen und/oder Vorsprünge und/oder Nuten und/oder außermittig angeordnete, sich parallel zur Drehachse erstreckende Stifte und/oder Bolzen und/oder die beiden Stirnseiten einer Zykloidenscheibe miteinander verbindende, außermittige Durchgangsöffnungen umfassen, um nur einige denkbare Ausgestaltungen zu nennen.

Das Getriebe weist darüber hinaus mindestens ein um die Zylinderachse an oder im Gehäuse drehbar gelagertes Ausgangsorgan auf.

Das Ausgangsorgan kann aus zwei vermittels Distanzkörpern miteinander verbundenen Drehkörpern gebildet sein. Die Distanzkörper können sich durch außermittige Durchgangsöffnungen in den Zykloidenscheiben hindurch erstrecken, so dass die Zykloidenscheiben des Getriebes zwischen den Drehkörpern des Ausgangsorgans angeordnet sind.

Vorteilhaft ist ein gerades Übersetzungsverhältnis vorgesehen, wobei die Außenverzahnungen der Zykloidenscheiben jeweils eine gerade Zähnezahl aufweisen.

Das mindestens eine Ausgangsorgan steht mit einer oder mehreren Referenzflächen wenigstens einer Zykloidenscheibe in derartiger Wirkverbindung, dass die Bewegungen zumindest der jeweiligen Zykloidenscheibe in Drehbewegungen der Ausgangswelle umgewandelt werden.

Dabei wird die Bewegungen einer oder mehrerer Zykloidenscheiben bei deren Abwälzung im Gehäuse in eine Rotationsbewegung der Ausgangswelle umgewandelt. Mindestens ein Ausgangsorgan kann hierzu mit der Ausgangswelle verbunden sein, diese umfassen oder von dieser umfasst sein.

Das mindestens eine Ausgangsorgan kann hierzu ebenfalls über eine oder mehrere mit den Referenzflächen der Zykloidenscheiben korrespondierende Referenzflächen verfügen. Eine oder mehrere Referenzflächen des Ausgangsorgans können an, in oder auf einer normal zur Zylinderachse verlaufenden Fläche angeordnete, normal zur Zylinderachse radial verlaufende Führungsbahnen und/oder Vorsprünge und/oder Nuten und/oder außermittige Durchgangsöffnungen und/oder außermittig angeordnete, sich parallel zur Drehachse erstreckende Stifte und/oder Bolzen umfassen, um nur einige denkbare Ausgestaltungen zu nennen. Hierdurch ergeben sich korrespondierende Paare von Referenzflächen zwischen wenigstens einer Zykloidenscheibe und mindestens einem Ausgangsorgan, welche Translationsrelativbewegungen in Richtungen normal zur Zylinderachse zwischen Zykloidenscheibe und Ausgangsorgan erlauben und Rotationsrelativbewegungen um die Zylinderachse zwischen Zykloidenscheibe und Ausgangsorgan verhindern. Dabei können Wälzlager und/oder Wälzelemente zwischen den Paare bildenden Referenzflächen des Ausgangsorgans und den Referenzflächen der Zykloidenscheibe vorgesehen sein. Hierdurch werden Reibungsverluste verringert und der Wirkungsgrad des Getriebes erhöht.

Alternativ kann ein Ausgangsorgan für eine Gruppe von zwei oder mehr gleichmäßig um die Zylinderachse verdreht angeordneten Zykloidenscheiben vorgesehen sein, wobei zwischen jeder Zykloidenscheibe und dem Ausgangsorgan ein Transformationsorgan angeordnet ist. Hierbei verfügt das Ausgangsorgan ebenfalls wie die Zykloidenscheiben über eine oder mehrere Referenzflächen. Eine oder mehrere Referenzflächen des Ausgangsorgans können an, in oder auf einer normal zur Zylinderachse verlaufenden Fläche angeordnete, normal zur Zylinderachse radial verlaufende Führungsbahnen und/oder Vorsprünge und/oder Nuten und/oder außermittige Durchgangsöffnungen und/oder außermittig angeordnete, sich parallel zur Drehachse erstreckende Stifte und/oder Bolzen umfassen, um nur einige denkbare Ausgestaltungen zu nennen. Die Referenzflächen der Zykloidenscheiben korrespondieren hierbei jedoch nicht mit denen des Ausgangsorgans. Stattdessen verfügt jedes Transformationsorgan über mit den Referenzflächen der jeweiligen Zykloidenscheibe korrespondierende Referenzflächen sowie über mit den Referenzflächen des Ausgangsorgans korrespondierende Referenzflächen. Hierdurch ergeben sich korrespondierende Paare von Referenzflächen zwischen jeder Zykloidenscheibe und dem dieser zugeordneten Transformationsorgan sowie korrespondierende Paare von Referenzflächen zwischen den Transformationsorganen und dem Ausgangsorgan. Die Paare von Referenzflächen erlauben Translationsrelativbewegungen in Richtungen normal zur Zylinderachse zwischen Zykloidenscheibe und Ausgangsorgan und verhindern Rotationsrelativbewegungen um die Zylinderachse zwischen Zykloidenscheibe und Ausgangsorgan. Die Transformationsorgane führen hierbei Zwischenbewegungen aus. Dabei handelt es sich bezogen auf das jeweilige Transformationsorgan um erste, hin- und hergehende Zwischenbewegungen entlang einer ersten Richtung relativ zum Ausgangsorgan sowie um zweite, hin- und hergehende Zwischenbewegungen entlang einer zur ersten Richtung orthogonalen, zweiten Richtung relativ zur Zykloidenscheibe. Die beiden senkrecht aufeinander stehenden ersten und zweiten Richtungen liegen in einer normal zur Zylinderachse verlaufenden Ebene. Dabei können Wälzlager und/oder Wälzelemente zwischen den Paare bildenden Referenzflächen des Ausgangsorgans und den Referenzflächen der Transformationsorgane sowie zwischen den Paare bildenden Referenzflächen der Transformationsorgane und den Zykloidenscheiben vorgesehen sein. Hierdurch werden Reibungsverluste verringert und der Wirkungsgrad des Getriebes erhöht.

Die Paare bildenden Referenzflächen zwischen Zykloidenscheibe und Transformationsorgan können dabei grundsätzlich identisch ausgebildet sein, wie die Paare bildenden Referenzflächen zwischen Transformationsorgan und Ausgangsorgan.

Auch bei einer Ausführung mit Transformationsorganen kann das Ausgangsorgan aus zwei vermittels Distanzkörpern miteinander verbundenen Drehkörpern gebildet sein. Die Distanzkörper können sich durch außermittige Durchgangsöffnungen in den Zykloidenscheiben sowie ebenfalls durch außermittige Durchgangsöffnungen oder entsprechende Aussparungen in den Transformationsorganen hindurch erstrecken, so dass die Zykloidenscheiben des Getriebes zwischen den Transformationsorganen und diese wiederum zwischen den Drehkörpern des Ausgangsorgans angeordnet sind.

Eine Zykloidenscheibe kann beispielsweise als ein Zahnrad mit einer Außenverzahnung oder als eine Kurvenscheibe ausgeführt sein. Der Kontakt zwischen dem Gehäuse und einer Zykloidenscheibe vermittels der Innenverzahnung kann beispielsweise ebenfalls mit Zähnen oder über Rollen- und/oder Kugellager hergestellt sein.

Das Getriebe zeichnet sich durch ein gerades Übersetzungsverhältnis aus.

Das gerade Übersetzungsverhältnis entspricht vorzugsweise einer Potenz von zwei, beispielsweise vier, acht, sechzehn, zweiunddreißig, vierundsechzig, einhundertachtundzwanzig, zweihundertsechsundfünfzig, fünfhundertzwölf etc.

Um das gerade Übersetzungsverhältnis zu erhalten, weisen die Zykloidenscheiben jeweils eine gerade Zähnezahl auf.

Die Innenverzahnung des Gehäuses weist eine höhere Zähnezahl auf, vorzugsweise eine um eins höhere Zähnezahl als eine Zykloidenscheibe. Damit weist die Innenverzahnung am Gehäuse vorzugsweise eine um eins höhere, ungerade Zähnezahl auf.

Um trotz ungerader Anzahl von Zähnen der Innenverzahnung und gerader Anzahl von Zähnen der Zykloidenscheiben bei zwei oder mehr Zykloidenscheiben auf gleichmäßig um die Eingangswelle verdreht angeordneten Exzenterabschnitten drehbar anordnen zu können, deren Bewegungen bei deren Abwälzungen auf der Gehäuseinnenfläche vermittels nur eines diesen Zykloidenscheiben zugeordneten Ausgangsorgans in Rotationsbewegungen der Ausgangswelle umgewandelt werden, kann die Erfindung vorsehen, die Referenzflächen von gegeneinander um die Zylinderachse verdreht angeordneten Zykloidenscheiben gegenüber deren Außenverzahnung um einen Versatz ihrer Winkellage um deren Drehachse verdreht anzuordnen. Der Versatz der gegenseitigen Verdrehung ergibt sich durch den Quotienten der Differenz der Zähnezahl der Innenverzahnung und der Außenverzahnung zur Anzahl der in verschiedenen Drehlagen verdreht angeordneten und einem Ausgangsorgan zugeordneten Zykloidenscheiben.

Liegen zwei Zykloidenscheiben eines mit zwei gegeneinander um 180° verdreht angeordneten Zykloidenscheiben ausgestatteten, erfindungsgemäßen Getriebes bei gleicher Ausrichtung deren Referenzflächen unmittelbar übereinander und sind deren Drehachsen identisch, ist ausgehend von einer ersten Zykloidenscheibe die Außenverzahnung der verbleibenden, zweiten Zykloidenscheibe um den Versatz verdreht gegenüber der ersten Zykloidenscheibe angeordnet.

Liegen drei oder n Zykloidenscheiben eines mit drei oder n gegeneinander um 120° oder entsprechend 360°/n verdreht angeordneten Zykloidenscheiben ausgestatteten, erfindungsgemäßen Getriebes bei gleicher Ausrichtung deren Referenzflächen unmittelbar übereinander und sind deren Drehachsen identisch, sind die Außenverzahnung der Zykloidenscheiben jeweils gegenseitig um den Versatz verdreht angeordnet.

Um trotz ungerader Anzahl von Zähnen der Innenverzahnung und gerader Anzahl von Zähnen der Zykloidenscheiben bei zwei oder mehr Zykloidenscheiben auf gleichmäßig um die Eingangswelle verdreht angeordneten Exzenterabschnitten drehbar anordnen zu können, deren Bewegungen bei deren Abwälzungen auf der Gehäuseinnenfläche vermittels nur eines diesen Zykloidenscheiben zugeordneten Ausgangsorgans in Rotationsbewegungen der Ausgangswelle umgewandelt werden, kann die Erfindung alternativ den einzelnen Zykloidenscheiben zugeordnete, ringförmige Partien der Innenverzahnung vorsehen. Je eine ringförmige Partie der Innenverzahnung ist dabei einer Zykloidenscheibe zugeordnet. Damit umfasst das Getriebe eine der Anzahl von Zykloidenscheiben entsprechende Anzahl von ringförmigen Partien der Innenverzahnung. Jede ringförmige Partie der Innenverzahnung kann dabei mit einer Verzahnung mit der selben Zähnezahl ausgeführt sein. Die Verzahnungen der gegeneinander um die Zylinderachse verdreht angeordneten Zykloidenscheiben zugeordneten ringförmigen Partien der Innenverzahnung sind dabei gegeneinander um einen Versatz ihrer Winkellage um die Zylinderachse verdreht angeordnet. Der Versatz der gegenseitigen Verdrehung ergibt sich durch den Quotienten der Differenz der Zähnezahl der Innenverzahnung und der Außenverzahnung zur Anzahl der in verschiedenen Drehlagen verdreht angeordneten und einem Ausgangsorgan zugeordneten Zykloidenscheiben.

Sind zwei gegeneinander um 180° verdreht angeordnete Zykloidenscheiben vorgesehen, so sind zwei ringförmige Partien der Innenverzahnung vorgesehen, deren Verzahnungen gegeneinander um den Versatz um die Zylinderachse verdreht an der Gehäuseinnenwand angeordnet sind.

Sind drei oder mehr verdreht angeordnete Zykloidenscheiben vorgesehen, so sind entsprechend drei oder mehr ringförmige Partien der Innenverzahnung vorgesehen, deren Verzahnungen gleichmäßig gegeneinander um den Versatz um die Zylinderachse verdreht an der Gehäuseinnenwand angeordnet sind.

Um trotz ungerader Anzahl von Zähnen der Innenverzahnung und gerader Anzahl von Zähnen der Zykloidenscheiben bei zwei oder mehr Zykloidenscheiben auf gleichmäßig um die Eingangswelle verdreht angeordneten Exzenterabschnitten drehbar anordnen zu können, deren Bewegungen bei deren Abwälzungen auf der Gehäuseinnenfläche vermittels nur eines diesen Zykloidenscheiben zugeordneten Ausgangsorgans in Rotationsbewegungen der Ausgangswelle umgewandelt werden, kann die Erfindung gemäß einer dritten Alternative eine gerade Zähnezahldifferenz der Innenverzahnung am Gehäuse und der Außenverzahnungen der Zykloidenscheiben vorsehen.

Es ist ersichtlich, dass die Erfindung verwirklicht sein kann durch ein einstufiges Getriebe umfassend zwei oder mehrere jeweils versetzt zueinander vermittels einer mit einer entsprechenden Anzahl gleichmäßig zueinander verdreht angeordneter Exzenter versehenen Eingangswelle exzentrisch angetriebene Zykloidenscheiben, die in einem Gehäuse abwälzen. Eine Zykloidenscheibe kann beispielsweise als ein Zahnrad mit einer Außenverzahnung oder als eine Kurvenscheibe ausgeführt sein. Der Kontakt zwischen dem Gehäuse und einer Zykloidenscheibe kann beispielsweise vermittels einer Innenverzahnung ebenfalls mit Zähnen oder über Rollen- und/oder Kugellager hergestellt sein. Ein Ausgangsorgen wandelt die Bewegungen der einen oder mehreren Zykloidenscheiben bei deren Abwälzung im Gehäuse in eine Rotationsbewegung einer Ausgangswelle um. Das Ausgangsorgan steht dabei zur Umwandlung der Bewegungen der mindestens einen Zykloidenscheibe mit einer oder mehreren Referenzflächen der wenigstens einen Zykloidenscheibe in Wirkverbindung, beispielsweise an einer Zykloidenscheibe angeordnete Führungsbahnen und/oder Vorsprünge und/oder Nuten und/oder außermittige Durchgangsöffnungen, um nur einige denkbare Ausgestaltungen zu nennen. Dabei können Wälzlager und/oder Wälzelemente zwischen dem Ausgangsorgan und den Referenzflächen vorgesehen sein. Die Zykloidenscheiben weisen jeweils eine gerade Zähnezahl auf, wohingegen das Gehäuse eine Innenverzahnung mit einer ungeraden Zähnezahl aufweist. Um eine gleichmäßig verdrehte Anordnung der zwei oder mehreren Zykloidenscheiben um die Eingangswelle zu ermöglichen, sind die Referenzflächen von gegeneinander verdreht angeordneten Zykloidenscheiben gegenüber deren Außenverzahnung um einen Versatz ihrer Winkellage um deren Drehachse verdreht angeordnet. Der Versatz der gegenseitigen Verdrehung ergibt sich durch den Quotienten der Differenz der Zähnezahl der Innenverzahnung und der Außenverzahnung zur Anzahl der in verschiedenen Drehlagen verdreht angeordneten Zykloidenscheiben.

Sind beispielsweise zwei, vier oder acht etc. um 180° versetzt angeordnete Zykloidenscheiben bei einer Differenz der Zähnezahl der Innenverzahnung und der Außenverzahnung von eins vorgesehen, so sind die Referenzflächen der einen Hälfte der jeweils um 180° gegeneinander verdreht angeordneten Zykloidenscheiben gegenüber den Zähnen deren Außenverzahnung im Vergleich zur anderen Hälfte der jeweils um 180° gegeneinander verdreht angeordneten Zykloidenscheiben um einen halben Zahn versetzt angeordnet.

Sind beispielsweise drei, sechs oder neun etc. um 120° versetzt angeordnete Zykloidenscheiben bei einer Differenz der Zähnezahl der Innenverzahnung und der Außenverzahnung von eins vorgesehen, so sind die Referenzflächen jeden Drittels der jeweils um 120° gegeneinander verdreht angeordneten Zykloidenscheiben gegenüber den Zähnen deren Außenverzahnung im Vergleich zu den verbleibenden Dritteln der jeweils um 120° gegeneinander verdreht angeordneten Zykloidenscheiben um einen drittel Zahn versetzt angeordnet.

Vorteile gegenüber dem Stand der Technik sind neben einer Behebung der Eingangs genannten Nachteile des Standes der Technik ein gerades Übersetzungsverhältnis, mit dem beispielsweise auch für Stellantriebe besonders geeignete Übersetzungsverhältnisse einer Potenz von zwei verwirklicht werden können.

Zusätzliche Vorteile gegenüber dem Stand der Technik sind eine Verringerung der Komplexität der Steuerung eines Antriebs eines einstufigen Getriebes mit zwei oder mehr gleichmäßig um die Eingangswelle verdreht angeordneten Zykloidenscheiben sowie der Berechnung der Voreinstellung der Drehung der Ausgangswelle, einhergehend mit einer im Vergleich zu einem ungeraden Übersetzungsverhältnis erhöhten Genauigkeit der Steuerung und der Berechnung.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

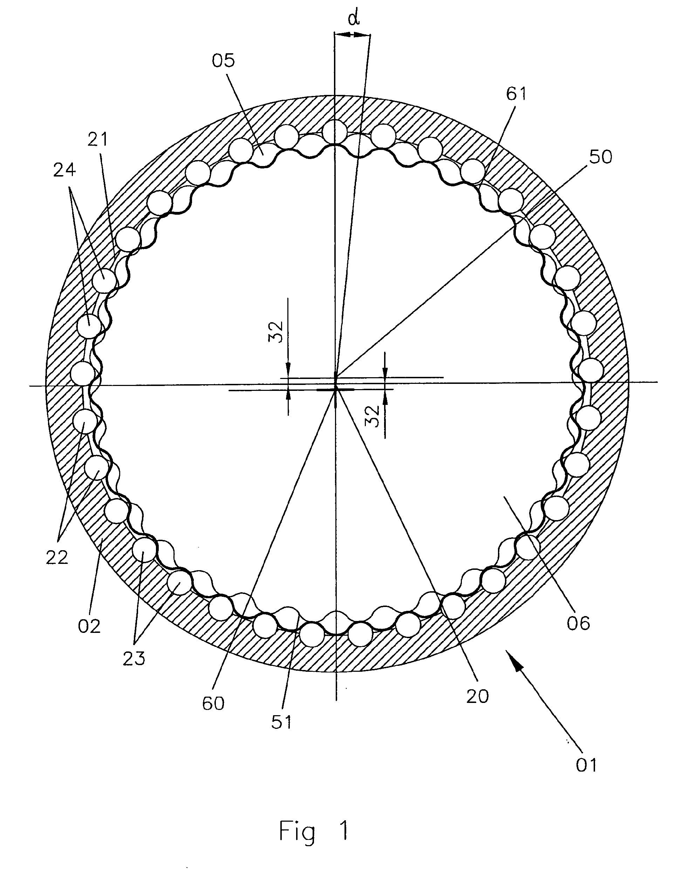

- Fig. 1: ein erstes Ausführungsbeispiel eines Getriebes mit zwei um 180° zueinander versetzt angeordneten Zykloidenscheiben in einem Querschnitt normal zur Zylinderachse.

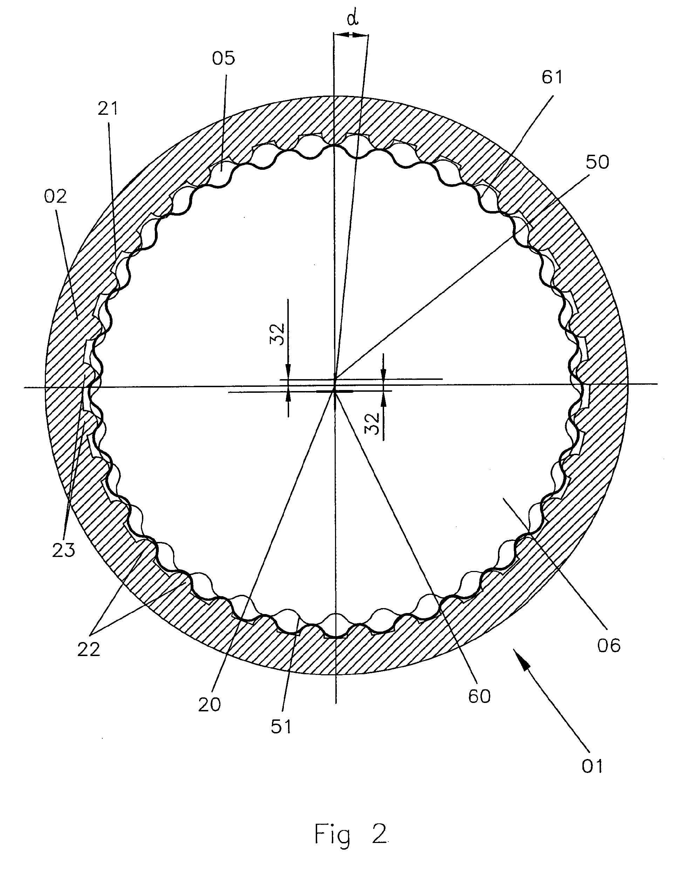

- Fig. 2: ein zweites Ausführungsbeispiel eines Getriebes mit zwei um 180° zueinander versetzt angeordneten Zykloidenscheiben in einem Querschnitt normal zur Zylinderachse.

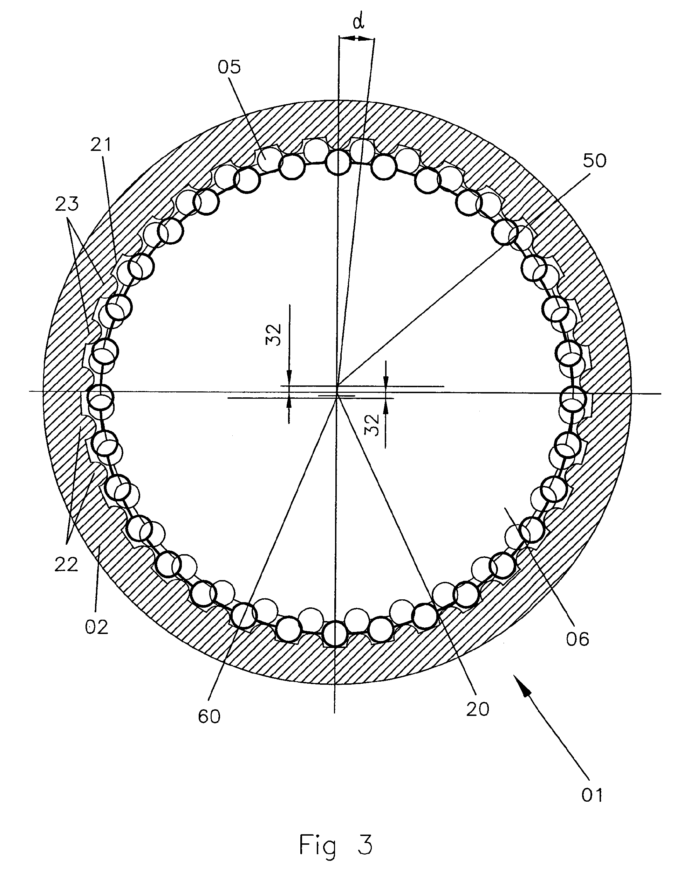

- Fig. 3: ein drittes Ausführungsbeispiel eines Getriebes mit zwei um 180° zueinander versetzt angeordneten Zykloidenscheiben in einem Querschnitt normal zur Zylinderachse.

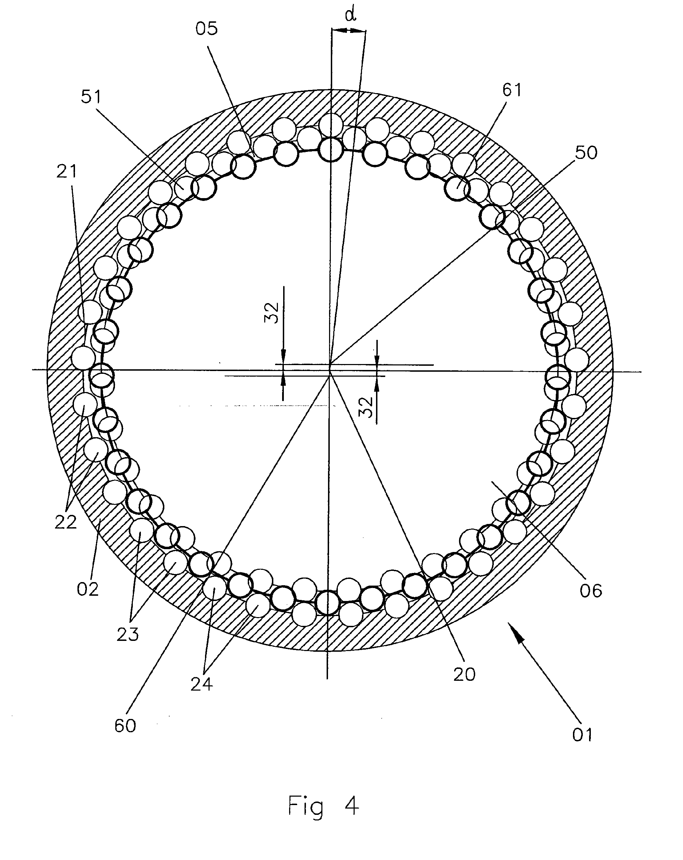

- Fig. 4: ein viertes Ausführungsbeispiel eines Getriebes mit zwei um 180° zueinander versetzt angeordneten Zykloidenscheiben in einem Querschnitt normal zur Zylinderachse.

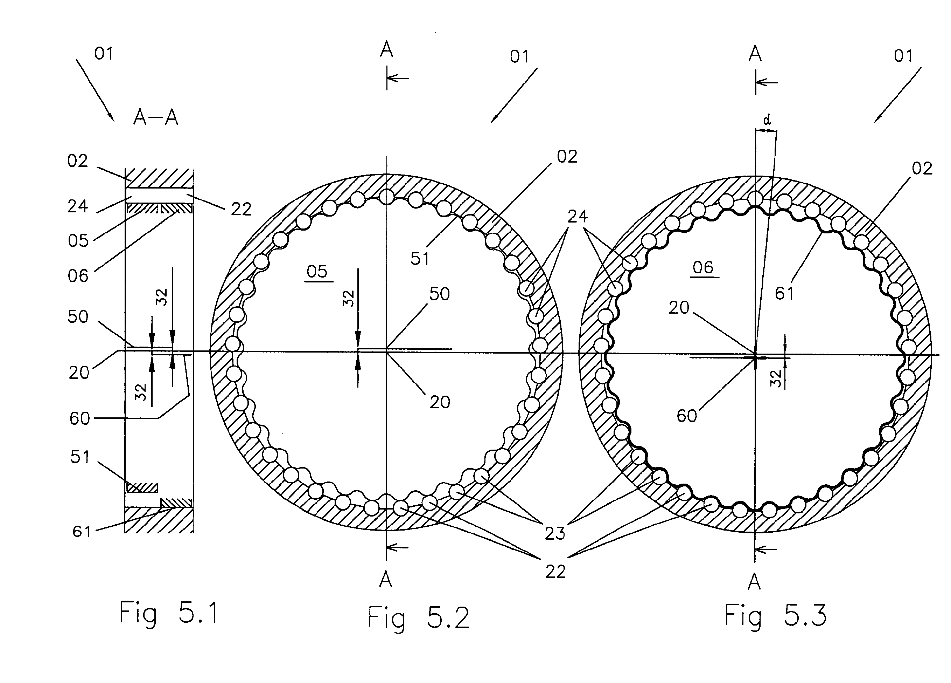

- Fig. 5: ein fünftes Ausführungsbeispiel eines Getriebes mit zwei um 180° zueinander versetzt angeordneten Zykloidenscheiben in einem Längsschnitt parallel zur Zylinderachse in Fig. 5.1, in einem eine erste Zykloidenscheibe zeigenden ersten Querschnitt normal zur Zylinderachse in Fig. 5.2 sowie in einem eine zweite Zykloidenscheibe zeigenden zweiten Querschnitt normal zur Zylinderachse in Fig. 5.3.

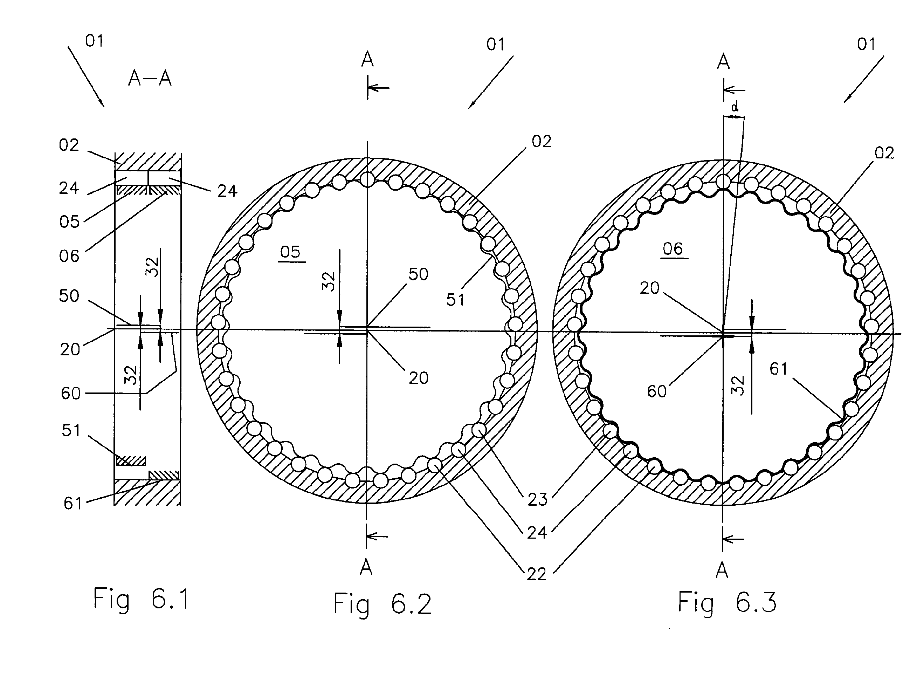

- Fig. 6: ein sechstes Ausführungsbeispiel eines Getriebes mit zwei um 180° zueinander versetzt angeordneten Zykloidenscheiben in einem Längsschnitt parallel zur Zylinderachse in Fig. 6.1, in einem eine erste Zykloidenscheibe zeigenden ersten Querschnitt normal zur Zylinderachse in Fig. 6.2 sowie in einem eine zweite Zykloidenscheibe zeigenden zweiten Querschnitt normal zur Zylinderachse in Fig. 6.3.

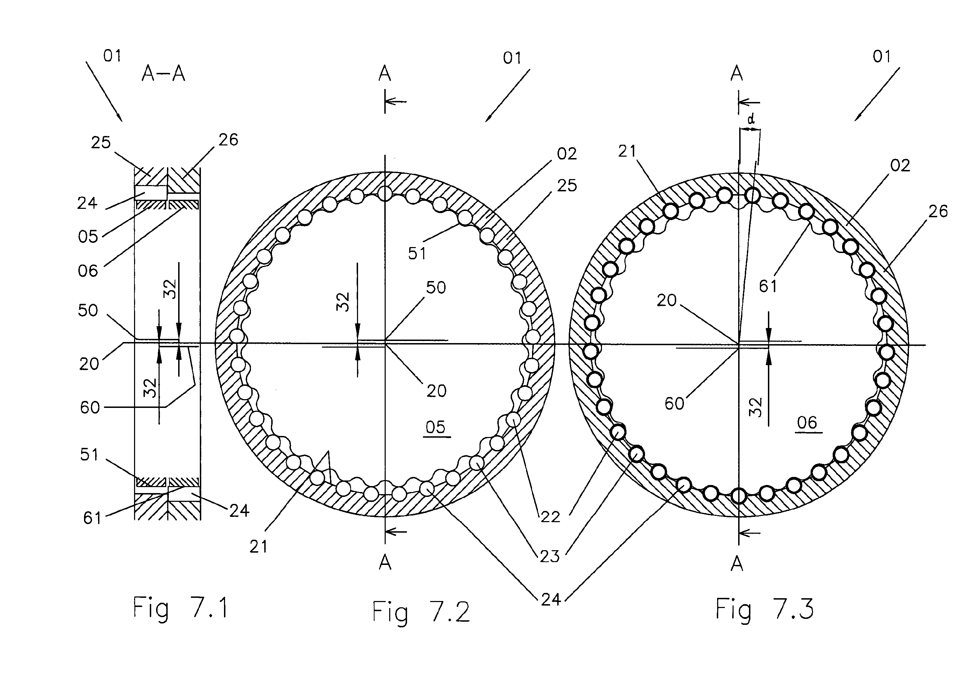

- Fig. 7: ein siebtes Ausführungsbeispiel eines Getriebes mit zwei um 180° zueinander versetzt angeordneten Zykloidenscheiben in einem Längsschnitt parallel zur Zylinderachse in Fig. 7.1, in einem eine erste Zykloidenscheibe zeigenden ersten Querschnitt normal zur Zylinderachse in Fig. 7.2 sowie in einem eine zweite Zykloidenscheibe zeigenden zweiten Querschnitt normal zur Zylinderachse in Fig. 7.3.

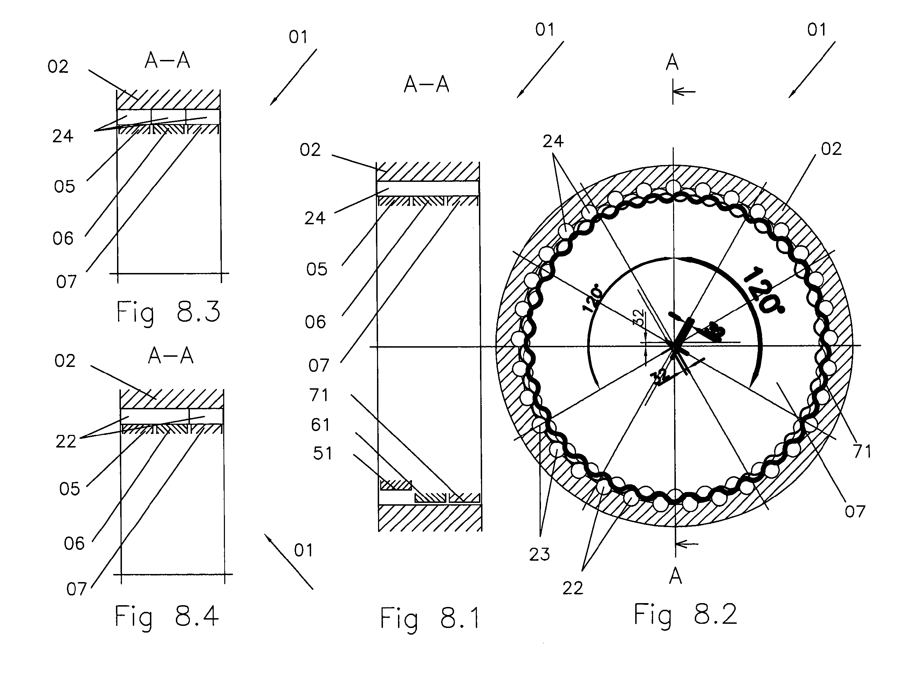

- Fig. 8: ein achtes Ausführungsbeispiel eines Getriebes mit drei um 120° zueinander versetzt angeordneten Zykloidenscheiben in einem Längsschnitt parallel zur Zylinderachse in Fig. 8.1, in einem die Lagen der Zykloidenscheiben zeigenden Querschnitt normal zur Zylinderachse in Fig. 8.2, sowie alternative Ausgestaltungen der Innenverzahnungen des Getriebes in einem Längsschnitt parallel zur Zylinderachse in Fig. 8.3 und in Fig. 8.4.

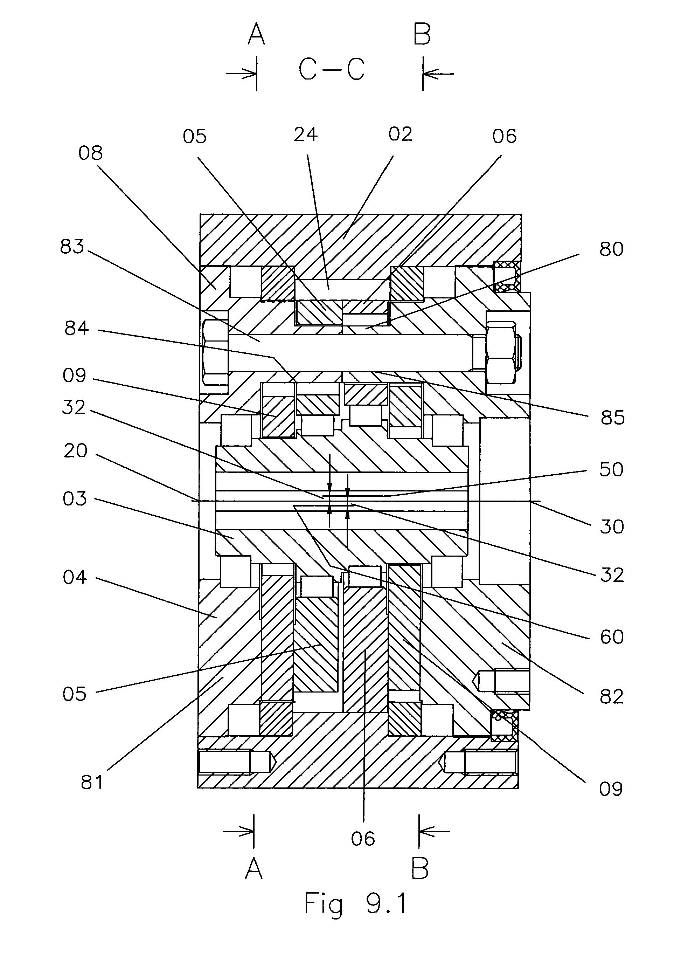

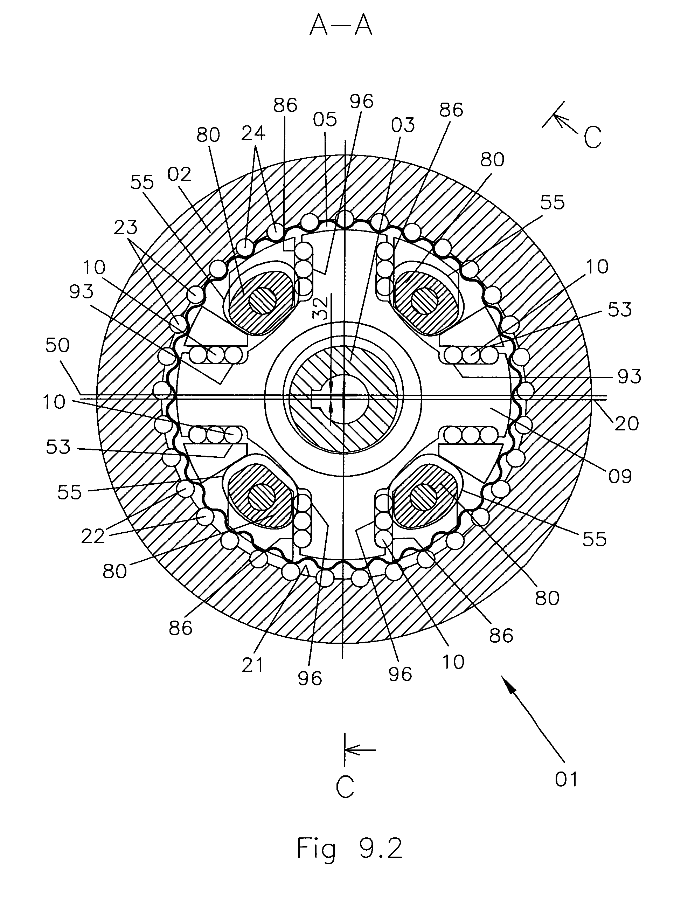

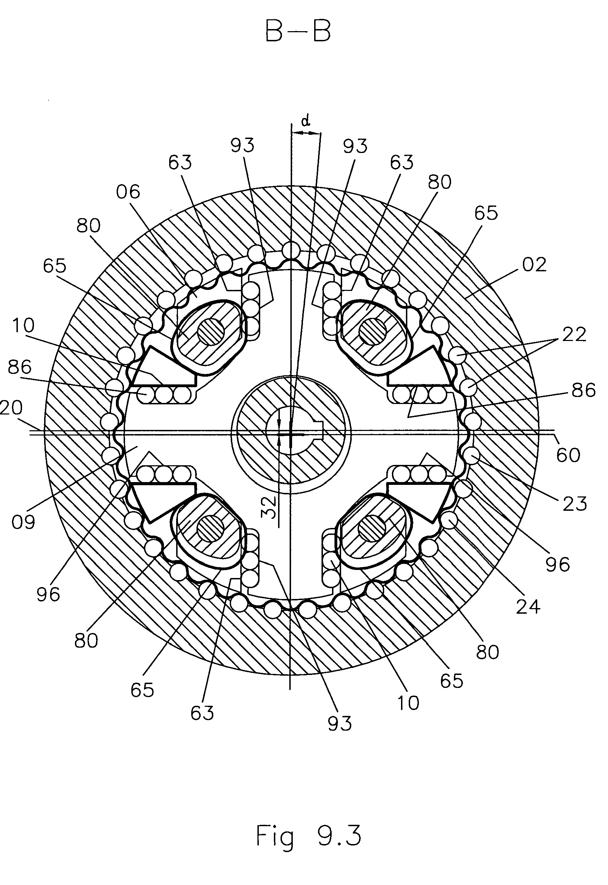

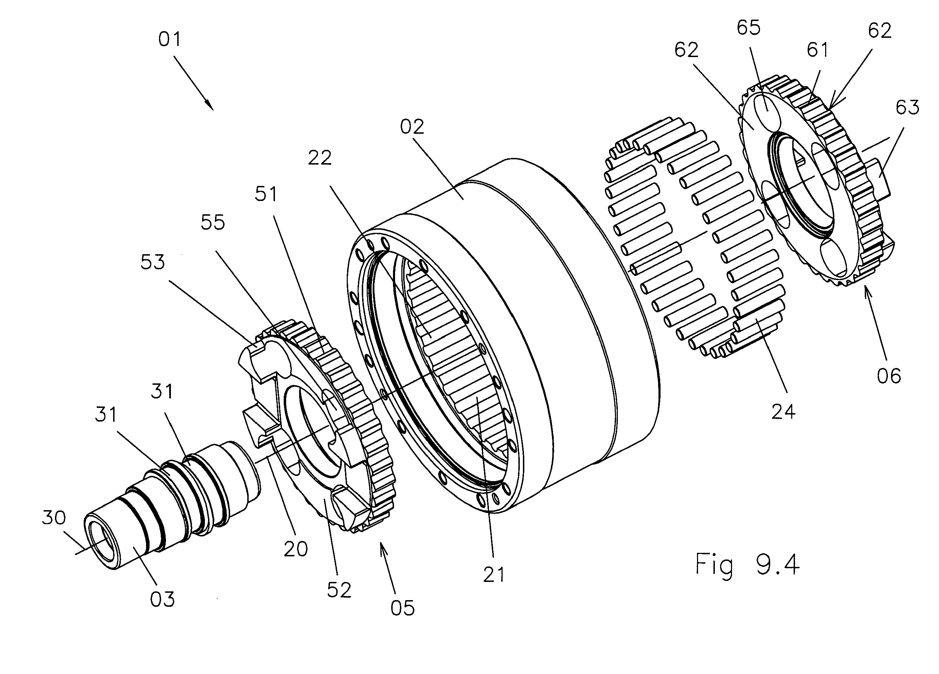

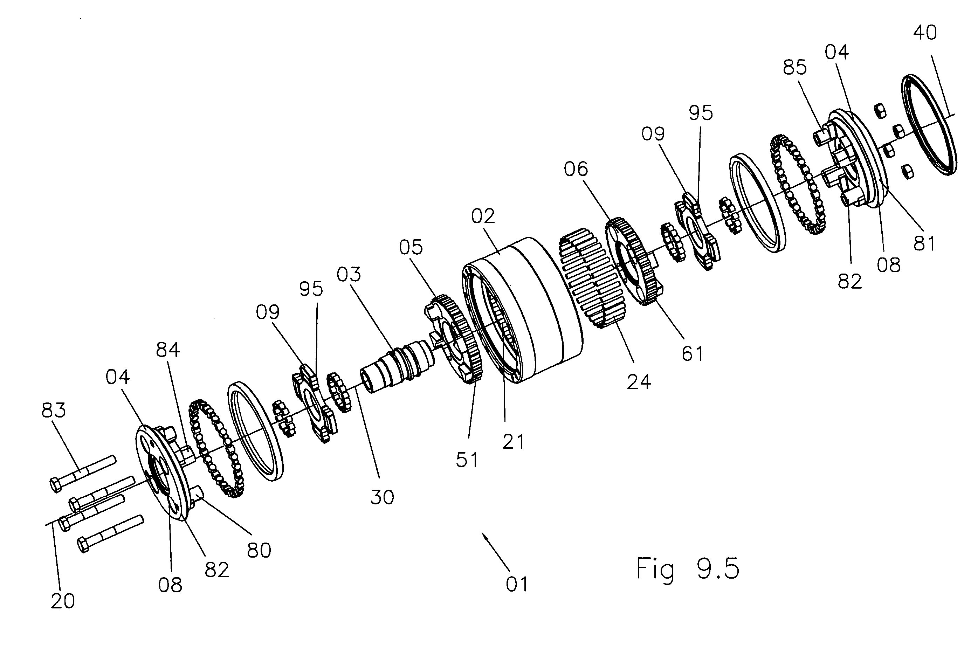

- Fig. 9: ein neuntes Ausführungsbeispiel eines Getriebes mit zwei um 180° zueinander versetzt angeordneten Zykloidenscheiben sowie Transformationsorganen in einem Längsschnitt parallel zur Zylinderachse in Fig. 9.1, in einem eine erste Zykloidenscheibe und ein dieser zugeordnetes erstes Transformationsorgan zeigenden ersten Querschnitt normal zur Zylinderachse in Fig. 9.2, in einem eine zweite Zykloidenscheibe und ein dieser zugeordnetes zweites Transformationsorgan zeigenden zweiten Querschnitt normal zur Zylinderachse in Fig. 9.3, in einer perspektivischen Ansicht nur dessen Gehäuses, der Innenverzahnung, der zwei um 180° zueinander versetzt angeordneten Zykloidenscheiben, einer Eingangswelle mit zwei gleichmäßig um deren Längsachse verdreht angeordneten Exzenterabschnitten gleicher Exzentrizität in Fig. 9.4, sowie einer Explosionsdarstellung des Getriebes in perspektivischer Ansicht in Fig. 9.5.

Ein in den Fig. 1 bis Fig. 9 ganz oder in Teilen dargestelltes Getriebe 01, hier Zykloidengetriebe, umfasst ein Gehäuse 02 mit einer konzentrisch um eine in Fig. 1, Fig. 2, Fig. 3, Fig. 4, Fig. 5.2, Fig. 5.3, Fig. 6.2, Fig. 6.3, Fig. 7.2, Fig. 7.3, Fig. 8.2, Fig. 9.2 und Fig. 9.3 senkrecht auf der Zeichenebene aufstehenden Zylinderachse 20 angeordneten, (hohl-) zylinderförmigen Gehäuseinnenwand 21. Die Gehäuseinnenwand 21 ist mit einer Innenverzahnung 22 versehen. Die Zähne 23 der Innenverzahnung 22 können sich parallel oder schräg bzw. windschief zur Zylinderachse 20 erstrecken.

Ein Getriebe 01 umfasst ferner eine im oder am Gehäuse 02 um die Zylinderachse 20 drehbar gelagerte Eingangswelle 03 mit mindestens zwei einzeln oder gruppenweise, beispielsweise paarweise, gleichmäßig um die mit der Zylinderachse 20 übereinstimmende Längsachse 30 der Eingangswelle 03 verdreht angeordneten Exzenterabschnitten 31 gleicher Exzentrizität 32.

Darüber hinaus umfasst ein Getriebe 01 eine im oder am Gehäuse 02 um die Zylinderachse 20 drehbar gelagerte Ausgangswelle 04. Die Längsachse 40 der Ausgangswelle 04 stimmt dabei mit der Zylinderachse 20 überein.

Außerdem umfasst ein Getriebe 01 mindestens zwei Zykloidenscheiben 05, 06, 07. Jede Zykloidenscheibe 05, 06, 07 ist um eine eigene, zentrale Drehachse 50, 60, 70 drehbar auf einem Exzenterabschnitt 31 der Eingangswelle 03 angeordnet. Jede Zykloidenscheibe 05, 06, 07 verfügt über eine mit der Innenverzahnung 22 der zylinderförmigen Gehäuseinnenwand 21 kämmende Außenverzahnung 51, 61, 71. Die Drehachse 50, 60, 70 jeder Zykloidenscheibe 05, 06, 07 ist um die Exzentrizität 32 der Exzenterabschnitte 31 zur Zylinderachse 20 versetzt. Der Durchmesser der Zykloidenscheiben 05, 06, 07 ist so bemessen, dass deren Außenverzahnung 51, 61, 71 in einer Richtung mit der Innenverzahnung 22 der zylinderförmigen Gehäuseinnenwand 21 kämmend in Eingriff kommt, in welche Richtung der Exzenterabschnitt 31, auf dem eine Zykloidenscheibe 05, 06, 07 angeordnet ist, momentan weist, wohingegen in der entgegengesetzten Richtung die Außenverzahnung 51, 61, 71 frei von einem Eingriff mit der Innenverzahnung 22 der zylinderförmigen Gehäuseinnenwand 21 ist. Dadurch können die Zykloidenscheiben 05, 06, 07 auf der Gehäuseinnenwand 21 abwälzen. Die Zykloidenscheiben 05, 06, 07 weisen an oder in zumindest einer ihrer normal zu deren Drehachse 50, 60, 70 verlaufenden Stirnseiten 52, 62 jeweils Referenzflächen 53, 63 auf.

Ein Getriebe 01 umfasst zudem mindestens ein um die Zylinderachse 20 drehbar gelagertes Ausgangsorgan 08, welches mit einer oder mehreren Referenzflächen 53, 63 wenigstens einer Zykloidenscheibe 05, 06, 07 in derartiger Wirkverbindung steht, dass die Bewegungen einer oder mehrerer Zykloidenscheiben 05, 06, 07 bei deren Abwälzung im Gehäuse 02 in eine Rotationsbewegung der Ausgangswelle 04 umgewandelt werden.

Die in den Fig. 1 bis Fig. 9 ganz oder in Teilen dargestellten Getriebe 01 zeichnen sich durch ein gerades Übersetzungsverhältnis aus. Die Zykloidenscheiben 05, 06, 07 weisen jeweils eine gerade Zähnezahl ihrer Außenverzahnungen 51, 61, 71 auf.

Die Zykloidenscheiben 05, 06, 07 mit ihrer Außenverzahnung 51, 61, 71 können wie in Fig. 3 und Fig. 4 dargestellt jeweils als ein Zahnrad, oder wie in Fig. 1 und Fig. 2 dargestellt als eine Kurvenscheibe ausgeführt sein.

Der Kontakt zwischen dem Gehäuse 02 und einer Zykloidenscheibe 05, 06, 07 kann wie in Fig. 2 und Fig. 3 dargestellt vermittels der Innenverzahnung 22 mit festen Zähnen 23 oder wie in Fig. 1 und Fig. 4 dargestellt vermittels der Innenverzahnung 22 mit Rollenelemente 24 und/oder Kugellagerelemente umfassenden, drehbaren Zähnen 23 hergestellt sein.

Das gerade Übersetzungsverhältnis entspricht vorzugsweise einer Potenz von zwei, beispielsweise vier, acht, sechzehn, zweiunddreißig, vierundsechzig, einhundertachtundzwanzig, zweihundertsechsundfünfzig, fünfhundertzwölf etc.

Die Innenverzahnung 22 des Gehäuses 02 weist vorzugsweise wie in den Fig. 1 bis Fig. 9 dargestellt eine um eine ungerade Zahl höhere Zähnezahl auf, als jeweils die Außenverzahnungen 51, 61, 71 der Zykloidenscheiben 05, 06, 07. Vorzugsweise handelt es sich dabei um eine um eins höhere Zähnezahl als die einer Außenverzahnung 51, 61, 71 einer Zykloidenscheibe 05, 06, 07. Damit weist die Innenverzahnung 22 am Gehäuse 02 vorzugsweise eine um eins höhere, ungerade Zähnezahl auf.

Ausgehend von einer relativen Drehlage oder Ausrichtung der Referenzflächen 53, 63 zur Außenverzahnung 51, 61, 71 einer Zykloidenscheibe 05, 06, 07 zweier oder mehrerer gegeneinander um die Zylinderachse 20 verdreht angeordneter Zykloidenscheiben 05, 06, 07 können die Referenzflächen 53, 63 der mindestens einen verbleibenden Zykloidenscheibe 06, 07, 05 der gegeneinander um die Zylinderachse 20 verdreht angeordneten Zykloidenscheiben 05, 06, 07 gegenüber deren Außenverzahnung 51, 61, 71 um einen Versatz ihrer Winkellage um deren Drehachse 50, 60, 70 verdreht angeordnet sein, um trotz ungerader Anzahl von Zähnen 23 der Innenverzahnung 22 und gerader Anzahl von Zähnen der Außenverzahnungen 51, 61, 71 der Zykloidenscheiben 05, 06, 07 zwei oder mehrere Zykloidenscheiben 05, 06, 07 auf gleichmäßig um die Eingangswelle 03 verdreht angeordneten Exzenterabschnitten 31 drehbar anordnen zu können, deren Bewegungen bei deren Abwälzungen auf der Gehäuseinnenfläche 21 vermittels nur eines diesen Zykloidenscheiben 05, 06, 07 zugeordneten Ausgangsorgans 08 in Rotationsbewegungen der Ausgangswelle 04 umgewandelt werden. Der in Fig. 1, Fig. 2, Fig. 3 und Fig. 4 besonders deutlich erkennbare Versatz der gegenseitigen Verdrehung der dort dargestellten zwei Zykloidenscheiben 05, 06 ergibt sich durch den Quotienten der Differenz der Zähnezahl der Innenverzahnung 22 und der Außenverzahnung 51, 61, 71 zur Anzahl der in verschiedenen Drehlagen verdreht angeordneten und einem Ausgangsorgan 08 zugeordneten Zykloidenscheiben 05, 06,07.

Liegen zwei Zykloidenscheiben 05, 06 eines mit zwei gegeneinander um 180° verdreht angeordneten Zykloidenscheiben 05, 06 ausgestatteten Getriebes 01 bei gleicher Ausrichtung deren Referenzflächen 53, 63 unmittelbar übereinander und sind deren Drehachsen 50, 60 identisch, ist ausgehend von einer ersten Zykloidenscheibe 05 die Außenverzahnung der verbleibenden, zweiten Zykloidenscheibe 06 um den Versatz verdreht gegenüber der ersten Zykloidenscheibe 05 angeordnet (Fig. 1 bis Fig. 7 und Fig. 9).

Liegen drei oder n Zykloidenscheiben 05, 06, 07 eines mit drei oder n gegeneinander um 120° oder entsprechend 360°/n verdreht angeordneten Zykloidenscheiben 05, 06, 07 ausgestatteten Getriebes 01 bei gleicher Ausrichtung deren Referenzflächen 53, 63 unmittelbar übereinander und sind deren Drehachsen 50, 60, 70 identisch, sind die Außenverzahnung 51, 61, 71 der Zykloidenscheiben 05, 06, 07 jeweils gegenseitig um den Versatz verdreht angeordnet (Fig. 8).

Alternativ zu einem Versatz der gegenseitigen Verdrehung der Relativlage von Außenverzahnung 51, 61, 71 zu Referenzflächen 53, 63 können wie in Fig. 7 dargestellt den einzelnen Zykloidenscheiben 05, 06 zugeordnete, ringförmige Partien 25, 26 der Innenverzahnung 22 vorgesehen sein. Je eine ringförmige Partie 25, 26 der Innenverzahnung 22 ist einer Zykloidenscheibe 05, 06 zugeordnet. Das Getriebe 01 umfasst eine der Anzahl von Zykloidenscheiben 05, 06 entsprechende Anzahl von ringförmigen Partien 25, 26 der Innenverzahnung 22. Die Verzahnungen der gegeneinander um die Zylinderachse 20 verdreht angeordneten Zykloidenscheiben 05, 06 zugeordneten ringförmigen Partien 25, 26 der Innenverzahnung 22 sind gegeneinander um einen Versatz ihrer Winkellage um die Zylinderachse 20 verdreht angeordnet Dieser Versatz der gegenseitigen Verdrehung ergibt sich durch den Quotienten der Differenz der Zähnezahl der Innenverzahnung 22 und der Außenverzahnungen 51, 61 zur Anzahl der in verschiedenen Drehlagen verdreht angeordneten und einem Ausgangsorgan 08 zugeordneten Zykloidenscheiben 05, 06. Auch hierdurch können trotz ungerader Anzahl von Zähnen 23 der Innenverzahnung 22 und gerader Anzahl von Zähnen der Außenverzahnungen 51, 61 der Zykloidenscheiben 05, 06 zwei oder mehrere Zykloidenscheiben 05, 06 auf gleichmäßig um die Eingangswelle 03 verdreht angeordneten Exzenterabschnitten 31 drehbar angeordnet werden, deren Bewegungen bei deren Abwälzungen auf der Gehäuseinnenfläche 21 vermittels nur eines diesen Zykloidenscheiben 05, 06 zugeordneten Ausgangsorgans 08 in Rotationsbewegungen der Ausgangswelle 04 umgewandelt werden.

Sind zwei gegeneinander um 180° verdreht angeordnete Zykloidenscheiben 05, 06 vorgesehen, so sind zwei ringförmige Partien 25, 26 der Innenverzahnung 22 vorgesehen, deren Verzahnungen gegeneinander um den Versatz, beispielsweise einen Versatz von einem halben Zahn bei einer Differenz der Zähnezahl der Innenverzahnung 22 des Gehäuses 02 zu den Außenverzahnungen 51, 61, der Zykloidenscheiben 05, 06, um die Zylinderachse 20 verdreht an der Gehäuseinnenwand 21 angeordnet sind.

Sind drei oder mehr verdreht angeordnete Zykloidenscheiben 05, 06, 07 vorgesehen, so sind entsprechend drei oder mehr ringförmige Partien 25, 26 der Innenverzahnung 22 vorgesehen, deren Verzahnungen gleichmäßig gegeneinander um den Versatz um die Zylinderachse 20 verdreht an der Gehäuseinnenwand 21 angeordnet sind.

Eine zusätzliche Variante um trotz gerader Anzahl von Zähnen 23 der Außenverzahnungen 51, 61, 71 der Zykloidenscheiben 05, 06, 07 zwei oder mehr Zykloidenscheiben 05, 06, 07 auf gleichmäßig um die Eingangswelle verdreht angeordneten Exzenterabschnitten drehbar anordnen zu können, deren Bewegungen bei deren Abwälzungen auf der Gehäuseinnenfläche 21 vermittels nur eines diesen Zykloidenscheiben 05, 06, 07 zugeordneten Ausgangsorgans 08 in Rotationsbewegungen der Ausgangswelle 04 umgewandelt werden, ergibt sich dadurch, dass die Innenverzahnung 22 des Gehäuses 02 eine um eine gerade Zahl höhere Zähnezahl aufweist, als jeweils die Außenverzahnungen 51, 61, 71 der Zykloidenscheiben 05, 06, 07.

Das Ausgangsorgan 08 kann aus zwei vermittels Distanzkörpern 80 miteinander verbundenen Drehkörpern 81, 82 gebildet sein. Die Zykloidenscheiben 05, 06, 07 des Getriebes 01 sind dabei zwischen den Drehkörpern 81, 82 des Ausgangsorgans 08 angeordnet. Die Distanzkörper 80 können sich durch außermittige Durchgangsöffnungen 55, 65 in den Zykloidenscheiben 05, 06, 07 hindurch erstrecken. Die Distanzkörper 80 können separate, vermittels Verbindungselementen, wie etwa Schrauben 83 und/oder Bolzen mit den Drehkörpern 81, 82 verbundene Bauelemente sein. Alternativ können die Distanzkörper 80 mit einem der Drehkörper 81, 82 einstückig hergestellt sein. Wahlweise kann mindestens ein Distanzkörper 80 einstückig mit einem ersten Drehkörper 81 und mindestens ein verbleibender Distanzkörper 80 einstückig mit einem verbleibenden, zweiten Drehkörper 82 verbunden sein. Denkbar ist auch, dass die Distanzkörper 80 wie in Fig. 9.1 und Fig. 9.5 dargestellt zweigeteilt sind, wobei je ein Distanzkörperstumpf 84, 85 von zwei jeweils einen Distanzkörper 80 bildenden Distanzkörperstümpfen 84, 85 an einem Drehkörper 81, 82 angeordnet oder einstückig mit einem solchen verbunden und/oder hergestellt ist.

Es sind zwei Ausgangsorgane 08 (Fig. 9.5) vorgesehen, die fest miteinander verbindbar sind. Die Ausgangsorgane sind mit der Ausgangswelle 04 betrieblich verbunden.

Das mindestens eine Ausgangsorgan 08 kann mit der Ausgangswelle 04 verbunden sin, diese umfassen oder von dieser umfasst werden.

Auf jedem Exzenterabschnitt 31 der Eingangswelle 03 ist die selbe Anzahl von Zykloidenscheiben 05, 06, 07 drehbar angeordnet, wobei bevorzugt auf jedem Exzenterabschnitt 31 eine Zykloidenscheibe 05, 06, 07 drehbar angeordnet ist.

Zwischen dem Ausgangsorgan 08 und je einer Zykloidenscheibe 05, 06, 07 kann jeweils ein Transformationsorgan 09 vorgesehen sein. Das Ausgangsorgan 08 verfügt hierbei ebenfalls wie die Zykloidenscheiben 05, 06, 07 über eine oder mehrere Referenzflächen 86.

Jedes Transformationsorgan 09 verfügt über mit den Referenzflächen 53, 63 der jeweiligen Zykloidenscheibe 05, 06, 07 korrespondierende Referenzflächen 93 sowie über mit den Referenzflächen 86 des Ausgangsorgans 08 korrespondierende Referenzflächen 96, wodurch sich korrespondierende Paare von Referenzflächen 53, 93 bzw. 63, 93 zwischen jeder Zykloidenscheibe 05, 06, 07 und dem dieser zugeordneten Transformationsorgan 09 sowie korrespondierende Paare von Referenzflächen 96, 86 zwischen den Transformationsorganen 09 und dem Ausgangsorgan 08 ergeben. Die Paare von Referenzflächen 53, 93 bzw. 63, 93 und 96, 86 erlauben Translationsrelativbewegungen in Richtungen normal zur Zylinderachse 20 zwischen Zykloidenscheibe 05, 06, 07 und Ausgangsorgan 08 und verhindern Rotationsrelativbewegungen um die Zylinderachse 20 zwischen Zykloidenscheibe 05, 06, 07 und Ausgangsorgan 08. Die Transformationsorgane 09 führen dabei Zwischenbewegungen aus, bei denen es sich bezogen auf das jeweilige Transformationsorgan 09 um erste, hin- und hergehende Zwischenbewegungen entlang einer ersten Richtung relativ zum Ausgangsorgan 08 sowie um zweite, hin- und hergehende Zwischenbewegungen entlang einer zur ersten Richtung orthogonalen, zweiten Richtung relativ zur jeweiligen Zykloidenscheibe 05, 06, 07 handelt. Die beiden senkrecht aufeinander stehenden ersten und zweiten Richtungen liegen in einer normal zur Zylinderachse 20 verlaufenden Ebene.

Auch bei einer Ausführung mit Transformationsorganen 09 kann das Ausgangsorgan 08 aus zwei vermittels Distanzkörpern 80 miteinander verbundenen Drehkörpern 81, 82 gebildet sein. Die Distanzkörper 80 können sich durch außermittige Durchgangsöffnungen 55, 65 in den Zykloidenscheiben 05, 06, 07 sowie ebenfalls durch außermittige Durchgangsöffnungen oder entsprechende Aussparungen 95 in den Transformationsorganen 09 hindurch erstrecken, so dass die Zykloidenscheiben 05, 06, 07 des Getriebes 01 zwischen den Transformationsorganen 09 und diese wiederum zwischen den Drehkörpern 81, 82 des Ausgangsorgans 08 angeordnet sind.

Bei den Referenzflächen 53, 63, 93, 86, 96 in und/oder an den Zykloidenscheiben 05, 06, 07 und/oder in und/oder an dem Ausgangsorgan 08 und/oder in und/oder an dem Transformationsorgan 09 kann es sich um miteinander korrespondierende:
- normal zur Zylinderachse 20 radial verlaufende Führungsbahnen, und/oder
- Vorsprünge, und/oder
- Nuten, und/oder
- außermittig angeordnete, sich parallel zur Zylinderachse 20 erstreckende Stifte, und/oder
- außermittig angeordnete, sich parallel zur Zylinderachse 20 erstreckende Bolzen, und/oder
- sich parallel zur Zylinderachse 20 erstreckende, außermittige Durchgangsöffnungen
sowie Kombinationen hieraus handeln.

Zwischen zusammenwirkenden Referenzflächen 53, 93, 63, 93, 86, 96 unterschiedlicher Elemente des Getriebes 01, wie etwa zwischen den zusammenwirkenden Referenzflächen 53, 93, 63, 93 von Zykloidenscheiben 05, 06, 07 und Transformationsorganen 09 und/oder zwischen den zusammenwirkenden Referenzflächen 96, 86 von Transformationsorganen 09 und Ausgangsorgan 08 sind bevorzugt Wälzlager und/oder Wälzelemente 10 angeordnet, wie beispielsweise Wälzkörper. Hierdurch werden Reibungsverluste verringert und der Wirkungsgrad des Getriebes 01 erhöht.

Wichtig ist hervorzuheben, dass der wesentliche Vorteil der Verzahnung mit gerader Übersetzung darin besteht, dass bei den Berechnungen mit einer geraden Zahl gearbeitet werden kann, was beispielsweise die Antriebssteuerung des Getriebes, Zahnraddrehung und dergleichen vereinfacht oder präzisiert. Für den Prozess einer digitalisierten Steuerung von Servoantrieben, die das Getriebe antreiben oder Steuerung von Aktuatoren, Modulen oder anderer Einheiten mit integriertem Getriebe, entsprechen die optimalen geraden Übersetzungen einer Potenz von zwei.

In den Fig. 1, Fig. 2, Fig. 3 und Fig. 4 sind Ausführungen von Verzahnungen der genannten Art von Getrieben mit einem geraden Übersetzungsverhältnis und einem auch als Räderpaar bezeichneten Paar Zykloidenscheiben 05, 06 mit Außenverzahnung 51, 61 mit einer geraden Anzahl von Zähnen 23 dargestellt. Die Zykloidenscheiben 05, 06 sind dabei derart positioniert, so dass diese um 180° einander gegenseitig gedreht sind und gleichzeitig um eine Exzentrizität 32 gegenüber der in Fig. 1 bis Fig. 4 horizontal verlaufenden, mit der Zylinderachse 20 zusammen fallenden Getriebeachse bzw. Horizontalachse der Innenverzahnung 22 des Gehäuses 02 des Getriebes mit einer ungeraden Anzahl von Zähnen versetzt sind. In den angeführten Beispielen ist die Außenverzahnung 61 auf der zweiten Zyloidenscheibe 06 derart hergestellt, so dass sie um einen halben Abstand (d.h. um einen Winkel, einen Anteil von 180/gerade Übersetzung bzw. gerade Anzahl von Zähnen der Außenverzahnungen 51, 61 der Zykloidenscheiben 05, 06) gegenüber der Außenverzahnung 51 auf der ersten Zyloidenscheibe 05 gedreht ist.

Fig. 1 zeigt ein Ausführungsbeispiel der Verzahnung bestehend aus einer Innenverzahnung 22 mit Wälz- oder Rollenelementen 24 mit in einer ungeraden Anzahl von Zähnen 23 im Gehäuse 02 und mit einem Paar Zykloidenscheiben 05, 06 mit Außenverzahnung 51, 61, wobei auf der zweiten Zykloidenscheibe 06 die Außenverzahnung 61 derart hergestellt ist, so dass sie um einen Winkel 180°/Wert der geraden Übersetzung gegenüber der Außenverzahnung 51 der verbleibenden, ersten Zykloidenscheibe 05 gedreht ist. Einige Zähne 23 mit Wälz- oder Rollenelementen 24 im Gehäuse 02 können auch weggelassen werden oder entsprechende, zusammen mit Wälz- oder Rollenelementen 24 Zähne 23 bildende Nuten nicht mit Wälz- oder Rollenelementen 24 gefüllt sein. Einige Zähne der Außenverzahnungen 51, 61 der Zykloidenscheiben 05, 06 können weggelassen werden.

Fig. 2 zeigt ein Ausführungsbeispiel der Verzahnung bestehend aus einer Innenverzahnung 22 im Gehäuse 02 mit in einer ungeraden Anzahl von Zähnen 23 und mit einem Paar Zykloidenscheiben 05, 06 mit Außenverzahnung 51, 61, wobei auf der zweiten Zykloidenscheibe 06 die Außenverzahnung 61 derart hergestellt ist, so dass sie um einen Winkel 180°/Wert der geraden Übersetzung gegenüber der Außenverzahnung 51 der verbleibenden, ersten Zykloidenscheibe 05 gedreht ist. Einige Zähne 23 im Gehäuse 02 können weggelassen werden.

Fig. 3 zeigt ein Ausführungsbeispiel der Verzahnung bestehend aus einer Innenverzahnung 22 im Gehäuse 02 mit in einer ungeraden Anzahl von Zähnen 23 und mit einem Paar Zykloidenscheiben 05, 06 mit Außenverzahnung 51, 61 mit Wälz- oder Rollenelementen 54, 64 in einer geraden Zahl von Nuten an den Zykloidenscheiben 05, 06 als deren Außenverzahnungen 51, 61, wobei auf der zweiten Zykloidenscheibe 06 die Außenverzahnung 61 derart hergestellt ist, so dass sie um einen Winkel 180°/Wert der geraden Übersetzung gegenüber der Außenverzahnung 51 der verbleibenden, ersten Zykloidenscheibe 05 gedreht ist. Einige Nuten mit Wälz- oder Rollenelementen 54, 64 in den Zykloidenscheiben 05, 06 können auch weggelassen werden oder nicht mit Wälz- oder Rollenelementen 54, 64 gefüllt sein. Einige Zähne 23 im Gehäuse 02 können weggelassen werden.

Fig. 4 zeigt ein Ausführungsbeispiel der Verzahnung bestehend aus einer Innenverzahnung 22 mit Wälz- oder Rollenelementen 54, 64 mit in einer ungeraden Anzahl von Nuten im Gehäuse 02 und mit einem Paar Zykloidenscheiben 05, 06 mit Außenverzahnung 51, 61 mit Wälz- oder Rollenelementen 54, 64 in einer geraden Zahl von Nuten an den Zykloidenscheiben 05, 06 als deren Außenverzahnungen 51, 61. Auf der zweiten Zykloidenscheibe 06 ist die Außenverzahnung 61 derart hergestellt, dass sie um einen Winkel 180°/Wert der geraden Übersetzung gegenüber der Außenverzahnung 51 der verbleibenden, ersten Zykloidenscheibe 05 gedreht ist. Einige Nuten mit Wälz- oder Rollenelementen 24 im Gehäuse 02 können auch weggelassen werden oder nicht mit Wälz- oder Rollenelementen 24 gefüllt sein.

Fig. 5 zeigt in Fig. 5.1, Fig. 5.2 und Fig. 5.3 ein Beispiel der Anordnung der Verzahnung aus dem Ausführungsbeispiel aus Fig.1. Dabei zeigt Fig. 5.1 eine Schnittansicht A-A der Fig. 5.2 und der Fig. 5.3. Fig. 5.2 zeigt dabei einen Querschnitt, der eine Ansicht des Eingriffs der Zykloidenscheibe 05 in die Innenverzahnung 22 am Gehäuse 02 gewährt. Fig. 5.3 zeigt hingegen einen Querschnitt, der im selben Zustand des Getriebes 01 eine Ansicht des Eingriffs der Zykloidenscheibe 06 in die Innenverzahnung 22 am Gehäuse 02 gewährt.

Fig. 6 zeigt in Fig. 6.1, Fig. 6.2 und Fig. 6.3 ein Beispiel der Anordnung der Verzahnung aus dem Ausführungsbeispiel aus Fig.1. In dem Gehäuse 02 sind zwei Reihen von Wälz- oder Rollenelementen 24 angeordnet. Einige Nuten an der Gehäuseinnenwand 21 müssen nicht mit Wälz- oder Rollenelementen 24 hergestellt oder gefüllt sein. Alternativ können einige Nuten an der Gehäuseinnenwand 21 mit einem oder zwei oder mehreren Wälz- oder Rollenelementen 24 kombiniert gefüllt sein. Das Gehäuse 02 des Getriebes 01 kann in zwei oder mehrere Teile aufgeteilt sein, mit Nuten, die nach dem Verbinden eine Einheit bilden. Dabei zeigt Fig. 6.1 eine Schnittansicht A-A der Fig. 6.2 und der Fig. 6.3. Fig. 6.2 zeigt dabei einen Querschnitt, der eine Ansicht des Eingriffs der Zykloidenscheibe 05 in die Innenverzahnung 22 am Gehäuse 02 gewährt. Fig. 6.3 zeigt hingegen einen Querschnitt, der im selben Zustand des Getriebes 01 eine Ansicht des Eingriffs der Zykloidenscheibe 06 in die Innenverzahnung 22 am Gehäuse 02 gewährt.

Fig. 7 zeigt in Fig. 7.1, Fig. 7.2 und Fig. 7.3 eine Verzahnung mit gerader Übersetzung. Das Gehäuse 02 des Getriebes 01 bildet eine Einheit bestehend aus mindestens zwei Partien 25, 26 der Innenverzahnung 22 mit Nuten mit Wälz- oder Rollenelementen 24. Die zweite Partie 26 ist dabei gegenüber der ersten Partie 25 um einen Winkel 180°/ungerade Anzahl von Zähnen 23 des Gehäuses 02 gedreht angeordnet. Die Verzahnung beider Zykloidenscheiben 05, 06 ist dabei identisch. Dabei zeigt Fig. 7.1 eine Schnittansicht A-A der Fig. 7.2 und der Fig. 7.3. Fig. 7.2 zeigt dabei einen Querschnitt, der eine Ansicht des Eingriffs der Zykloidenscheibe 05 in die Partie 25 der Innenverzahnung 22 am Gehäuse 02 gewährt. Fig. 7.3 zeigt hingegen einen Querschnitt, der im selben Zustand des Getriebes 01 eine Ansicht des Eingriffs der Zykloidenscheibe 06 in die gegenüber der Partie 25 um einen Winkel 180°/ungerade Anzahl von Zähnen 23 des Gehäuses 02 gedrehte Partie 26 Innenverzahnung 22 am Gehäuse 02 gewährt. Die angeführte Lösung mit der Aufteilung der Innenverzahnung 22 des Gehäuses 02 in mehrere Partien 25, 26 kann mit Verzahnungen verwirklicht sein, wie sie auch bei den zuvor beschriebenen Ausführungen gemäß Fig. 1, Fig. 2, Fig. 3, Fig. 4 verwirklicht sind, wobei aber die zweite Partie der Innenverzahnung 22 des Gehäuses 02 um einen Winkel 180°/ungerade Anzahl von Zähnen 23 oder Nuten im Gehäuse 02 gedreht ist und die Zykloidenscheiben 05, 06 eine identische Verzahnung aufweisen. Einige Nuten am Gehäuse 02 müssen nicht mit Wälz- oder Rollenelementen 24 hergestellt oder gefüllt sein. Die Partien 25, 26 können durch zusammengefügte Teile des Gehäuses 02 gebildet sein.

In Fig. 8 ist eine Verzahnungslösung dargestellt mir einer Differenz der Zähnezahl der Innenverzahnung 22 zur Zähnezahl der Außenverzahnungen 51, 61, 71 der Zykloidenscheiben 05, 06, 07 von eins. Auch das in Fig. 8 dargestellte Getriebe 01 weist ein gerades Übersetzungsverhältnis auf. Das in Fig. 8 dargestellte Getriebe 01 weist drei Zykloidenscheiben 05, 06, 07 mit einer geraden Zähnezahl deren Außenverzahnungen 51, 61, 71 auf, sowie eine Innenverzahnung 22 an der Gehäuseinnenwand 21 des Gehäuses 02 mit einer ungeraden Anzahl von Zähnen 23 bzw. Nuten mit Wälz- oder Rollenelementen 24. Die Zykloidenscheiben 05, 06, 07 weisen alle identische Außenverzahnungen 51, 61, 71 auf. Die Zykloidenscheiben 05, 06, 07 werden derart angebracht, so dass sie zueinander um 120° gedreht und um eine Exzentrizität 32 versetzt sind.

Fig. 8.1, Fig. 8.3 und Fig. 8.4 zeigen hierbei eine Ansicht der Verzahnung in dem Schnitt A-A mit einer unterschiedlichen Anzahl von Wälz- oder Rollenelementen 24 in an der Gehäuseinnenwand 21 des Gehäuses 02 vorgesehenen Nuten des Getriebes 01.

Die Verzahnungen können dabei wiederum wie in den Fig. 1 bis Fig. 4 dargestellt ausgeführt sein.

Einige Nuten an dem Gehäuse 02 oder an den Zykloidenscheiben 05, 06, 07 müssen nicht mit Wälz- oder Rollenelementen 24 hergestellt oder gefüllt sein, oder können mit eins oder zwei oder mehreren Wälz- oder Rollenelementen 24 kombiniert gefüllt sein.

Das Getriebe 01 kann zur Verwendung in Verbindung mit einem Stellantrieb vorgesehen sein.

Die Erfindung ist insbesondere im Bereich der Herstellung von Getrieben sowie von Stellantrieben gewerblich anwendbar.

**Bezugszeichenliste**

| | |
|---|---|
| 01 | Getriebe |
| 02 | Gehäuse |
| 03 | Eingangswelle |
| 04 | Ausgangswelle |
| 05 | Zykloidenscheibe |
| 06 | Zykloidenscheibe |
| 07 | Zykloidenscheibe |
| 08 | Ausgangsorgan |
| 09 | Transformationsorgan |
| 10 | Wälzelement |
| 20 | Zylinderachse |
| 21 | Gehäuseinnenwand |
| 22 | Innenverzahnung |
| 23 | Zahn |
| 24 | Rollenelement |
| 25 | Partie der Innenverzahnung (der Zykloidenscheibe 05 zugeordnet) |
| 26 | Partie der Innenverzahnung (der Zykloidenscheibe 06 zugeordnet) |
| 30 | Längsachse der Eingangswelle 03 |
| 31 | Exzenterabschnitt |
| 32 | Exzentrizität |
| 40 | Längsachse der Ausgangswelle 04 |
| 50 | Drehachse der Zykloidenscheibe 05 |
| 51 | Außenverzahnung der Zykloidenscheibe 05 |
| 52 | Stirnseite der Zykloidenscheibe 05 |
| 53 | Referenzfläche der Zykloidenscheibe 05 |
| 54 | Rollenelement |
| 55 | außermittige Durchgangsöffnung in der Zykloidenscheibe 05 |
| 60 | Drehachse der Zykloidenscheibe 06 |
| 61 | Außenverzahnung der Zykloidenscheibe 06 |
| 62 | Stirnseite der Zykloidenscheibe 06 |
| 63 | Referenzfläche der Zykloidenscheibe 06 |
| 64 | Rollenelement |
| 65 | außermittige Durchgangsöffnung in der Zykloidenscheibe 06 |
| 70 | Drehachse der Zykloidenscheibe 07 |
| 71 | Außenverzahnung der Zykloidenscheibe 07 |
| 80 | Distanzkörper |
| 81 | Drehkörper |
| 82 | Drehkörper |
| 83 | Schraube |
| 84 | Distanzkörperstumpf |
| 85 | Distanzkörperstumpf |
| 86 | Referenzfläche des Ausgangsorgans 08 |
| 93 | Referenzfläche des Transformationsorgans 09 |
| 95 | Aussparung des Transformationsorgans 09 |
| 96 | Referenzfläche des Transformationsorgans 09 |

## Patentansprüche

1. Getriebe (01) mit:
- einem Gehäuse (02) mit einer konzentrisch um eine Zylinderachse (20) angeordneten, zylinderförmigen Gehäuseinnenwand (21), die mit einer Innenverzahnung (22) versehen ist,
- einer um die Zylinderachse (20) drehbar gelagerte Eingangswelle (03) mit mindestens zwei Exzenterabschnitten (31), die um die Achse gegeneinander um 180 Grad versetzt sind
- mindestens einer um die Zylinderachse (20) drehbar gelagerte Ausgangswelle (04), wobei die Längsachsen (30, 40) der Eingangswelle (03) und der Ausgangswelle (04) mit der Zylinderachse (20) übereinstimmen,
- mindestens zwei Zykloidenscheiben (05, 06, 07), von denen jede Zykloidenscheibe (05, 06, 07) um eine eigene, zentrale Drehachse (50, 60, 70) drehbar auf einem Exzenterabschnitt (31) angeordnet ist und über eine mit der Innenverzahnung (22) kämmende Außenverzahnung (51, 61, 71) aufweist, wobei die Drehachse (50, 60, 70) jeder Zykloidenscheibe (05, 06, 07) um die Exzentrizität (32) zur Zylinderachse (20) versetzt ist, wobei der Durchmesser der Zykloidenscheiben (05, 06, 07) so bemessen ist, dass deren Außenverzahnung (51, 61, 71) in einer Richtung mit der Innenverzahnung (22) in Eingriff kommt, wohingegen in der entgegengesetzten Richtung die Außenverzahnung (51, 61, 71) frei von einem Eingriff mit der Innenverzahnung (22) ist, und wobei die Zykloidenscheiben (05, 06, 07) jeweils Referenzflächen (53, 63) aufweisen,
- mindestens einem um die Zylinderachse (20) drehbar gelagertes Ausgangsorgan (08), das mit einer oder mehreren Referenzflächen (53, 63) wenigstens einer Zykloidenscheibe (05, 06, 07) in derartiger Wirkverbindung steht, dass die Bewegungen einer oder mehrerer Zykloidenscheiben (05, 06, 07) bei deren Abwälzung im Gehäuse (02) in eine Rotationsbewegung der Ausgangswelle (04) umgewandelt werden,

2. Getriebe nach Anspruch 1,
**dadurch gekennzeichnet,**
**dass** das gerade Übersetzungsverhältnis einer Potenz von zwei entspricht.

3. Getriebe nach Anspruch 1 oder 2,
**dadurch gekennzeichnet,**
**dass** die Innenverzahnung (22) des Gehäuses (02) eine um eine ungerade Zahl höhere Zähnezahl aufweist, als jeweils die Außenverzahnungen (51, 61, 71) der Zykloidenscheiben (05, 06, 07).

4. Getriebe nach Anspruch 3,
**dadurch gekennzeichnet,**
**dass** ausgehend von einer relativen Ausrichtung der Referenzflächen (53, 63) zur Außenverzahnung (51, 61, 71) einer Zykloidenscheibe (05, 06, 07) zweier oder mehrerer gegeneinander um die Zylinderachse (20) verdreht angeordneter Zykloidenscheiben (05, 06, 07), die Referenzflächen (53, 63) der mindestens einen verbleibenden Zykloidenscheibe (06, 07, 05) der gegeneinander um die Zylinderachse (20) verdreht angeordneten Zykloidenscheiben (05, 06, 07) gegenüber deren Außenverzahnung (51, 61, 71) um einen Versatz ihrer Winkellage um deren Drehachse (50, 60, 70) verdreht angeordnet sind, welcher Versatz der gegenseitigen Verdrehung sich durch den Quotienten der Differenz der Zähnezahl der Innenverzahnung (22) und der Außenverzahnung (51, 61, 71) zur Anzahl der in verschiedenen Drehlagen verdreht angeordneten und einem Ausgangsorgan (08) zugeordneten Zykloidenscheiben (05, 06, 07) ergibt.

5. Getriebe nach Anspruch 3,
**gekennzeichnet durch**
den einzelnen Zykloidenscheiben (05, 06, 07) zugeordnete, ringförmige Partien (25, 26) der Innenverzahnung (22), wobei je eine ringförmige Partie (25, 26) einer Zykloidenscheibe (05, 06, 07) zugeordnet ist und das Getriebe (01) eine der Anzahl von Zykloidenscheiben (05, 06, 07) entsprechende Anzahl von Partien (25, 26) umfasst, wobei die Verzahnungen der gegeneinander um die Zylinderachse (20) verdreht angeordneten Zykloidenscheiben (05, 06, 07) zugeordneten Partien (25, 26) gegeneinander um einen Versatz ihrer Winkellage um die Zylinderachse (20) verdreht angeordnet sind, welcher sich **durch** den Quotienten der Differenz der Zähnezahl der Innenverzahnung (22) und der Außenverzahnung (51, 61, 71) zur Anzahl der in verschiedenen Drehlagen verdreht angeordneten und einem Ausgangsorgan (08) zugeordneten Zykloidenscheiben (05, 06, 07) ergibt.

6. Getriebe nach Anspruch 1 oder 2,
**dadurch gekennzeichnet,**
**dass** die Innenverzahnung (22) eine um eine gerade Zahl höhere Zähnezahl aufweist, als jeweils die Außenverzahnungen (51, 61, 71) der Zykloidenscheiben (05, 06, 07).

7. Getriebe nach einem der vorhergehenden Ansprüche,
**dadurch gekennzeichnet,**
**dass** das Ausgangsorgan (08) aus zwei vermittels Distanzkörpern (80) miteinander verbundenen Drehkörpern (81, 82) gebildet ist, wobei die Zykloidenscheiben (05, 06, 07) des Getriebes (01) zwischen den Drehkörpern (81, 82) des Ausgangsorgans (08) angeordnet sind.

8. Getriebe nach einem der vorhergehenden Ansprüche,
**dadurch gekennzeichnet,**
**dass** das mindestens eine Ausgangsorgan (08) mit der Ausgangswelle (04) verbunden ist, diese umfasst oder von dieser umfasst wird.

9. Getriebe nach einem der vorhergehenden Ansprüche,
**dadurch gekennzeichnet,**
**dass** auf jedem Exzenterabschnitt (31) der Eingangswelle (03) dieselbe Anzahl von Zykloidenscheiben (05, 06, 07) drehbar angeordnet ist.

10. Getriebe nach einem der vorhergehenden Ansprüche,
**dadurch gekennzeichnet,**
**dass** eine oder mehrere Referenzflächen (53, 63) auf, an oder in einer oder beiden Stirnflächen (52, 62) einer Zykloidenscheibe (05, 06, 07) angeordnete:
- normal zur Drehachse (50, 60, 70) radial verlaufende Führungsbahnen, und/oder
- Vorsprünge, und/oder
- Nuten, und/oder
- außermittig angeordnete, sich parallel zur Drehachse (50, 60, 70) erstreckende Stifte, und/oder
- außermittig angeordnete, sich parallel zur Drehachse (50, 60, 70) erstreckende Bolzen, und/oder
- die beiden Stirnseiten (52, 62) einer Zykloidenscheibe (05, 06, 07) miteinander verbindende, außermittige Durchgangsöffnungen (55, 65) umfassen.

11. Getriebe nach einem der vorhergehenden Ansprüche,
**dadurch gekennzeichnet,**
**dass** das mindestens eine Ausgangsorgan (08) über eine oder mehrere mit den Referenzflächen (53, 63) zumindest einer der Zykloidenscheiben (05, 06, 07) korrespondierende Referenzflächen verfügt, wobei eine oder mehrere Referenzflächen des Ausgangsorgans (08) an, in oder auf einer normal zur Zylinderachse (20) verlaufenden Fläche des Ausgangsorgans (08) angeordnete:
- normal zur Zylinderachse (20) radial verlaufende Führungsbahnen, und/oder
- Vorsprünge, und/oder
- Nuten, und/oder
- außermittige Durchgangsöffnungen, und/oder
- außermittig angeordnete, sich parallel zur Zylinderachse (20) erstreckende Stifte, und/oder
- außermittig angeordnete, sich parallel zur Zylinderachse (20) erstreckende Bolzen
umfassen.

12. Getriebe nach einem der Ansprüche 1 bis 10,
**dadurch gekennzeichnet,**
**dass** zwischen dem Ausgangsorgan (08) und je einer Zykloidenscheibe (05, 06, 07) jeweils ein Transformationsorgan (09) angeordnet ist, wobei das Ausgangsorgan (08) ebenfalls wie die Zykloidenscheiben (05, 06, 07) über eine oder mehrere Referenzflächen (86) verfügt, wobei eine oder mehrere Referenzflächen (86) des Ausgangsorgans (08) an, in oder auf einer normal zur Zylinderachse (20) verlaufenden Fläche angeordnete:
- normal zur Zylinderachse (20) radial verlaufende Führungsbahnen, und/oder
- Vorsprünge, und/oder
- Nuten, und/oder
- außermittige Durchgangsöffnungen, und/oder
- außermittig angeordnete, sich parallel zur Zylinderachse (20) erstreckende Stifte, und/oder
- außermittig angeordnete, sich parallel zur Zylinderachse (20) erstreckende Bolzen
umfassen, und wobei jedes Transformationsorgan (09) über mit den Referenzflächen (53, 63) der jeweiligen Zykloidenscheibe (05, 06, 07) korrespondierende Referenzflächen (93) sowie über mit den Referenzflächen (86) des Ausgangsorgans (08) korrespondierende Referenzflächen (96) verfügt, wodurch sich korrespondierende Paare von Referenzflächen (53, 93; 63, 93) zwischen jeder Zykloidenscheibe (05, 06, 07) und dem dieser zugeordneten Transformationsorgan (09) sowie korrespondierende Paare von Referenzflächen (86, 96) zwischen den Transformationsorganen (09) und dem Ausgangsorgan (08) ergeben, welche Paare von Referenzflächen (53, 93; 63, 93; 86, 96) Translationsrelativbewegungen in Richtungen normal zur Zylinderachse (20) zwischen Zykloidenscheibe (05, 06, 07) und Ausgangsorgan (08) erlauben und Rotationsrelativbewegungen um die Zylinderachse (20) zwischen Zykloidenscheibe (05, 06, 07) und Ausgangsorgan (08) verhindern, wobei die Transformationsorgane (09) Zwischenbewegungen ausführen, bei denen es sich bezogen auf das jeweilige Transformationsorgan (09) um erste, hin- und hergehende Zwischenbewegungen entlang einer ersten Richtung relativ zum Ausgangsorgan (08) sowie um zweite, hin- und hergehende Zwischenbewegungen entlang einer zur ersten Richtung orthogonalen, zweiten Richtung relativ zur Zykloidenscheibe (05, 06, 07) handelt, und die beiden senkrecht aufeinander stehenden ersten und zweiten Richtungen in einer normal zur Zylinderachse (20) verlaufenden Ebene liegen.

13. Getriebe nach Anspruch 12,
**dadurch gekennzeichnet,**
**dass** die Paare bildenden Referenzflächen (53, 93; 63, 93) zwischen Zykloidenscheibe (05, 06, 07) und Transformationsorgan (09) identisch ausgebildet sind, wie die Paare bildenden Referenzflächen (86, 96) zwischen Transformationsorgan (09) und Ausgangsorgan (08).

14. Getriebe nach Anspruch 11, 12 oder 13,
**gekennzeichnet durch**
zwischen zusammenwirkenden Referenzflächen (53, 93; 63, 93; 86, 96) unterschiedlicher Elemente des Getriebes (01), zumindest zwischen den zusammenwirkenden Referenzflächen von:
- Zykloidenscheiben (05, 06, 07) und Ausgangsorgan (08), oder
- Zykloidenscheiben (05, 06, 07) und Transformationsorganen (09) sowie Transformationsorganen (09) und Ausgangsorgan (08), angeordnete Wälzlager und/oder Wälzelemente (10).

15. Getriebe nach einem der vorhergehenden Ansprüche,
**dadurch gekennzeichnet, dass**
- die Zykloidenscheiben (05, 06, 07) als ein Zahnrad oder als eine Kurvenscheibe ausgeführt sind, und/oder
- der Kontakt zwischen dem Gehäuse (02) und einer Zykloidenscheibe (05, 06, 07) vermittels fester Zähne (23) oder durch Rollen- (24) und/oder Kugellagerelemente gebildete, drehbare Zähne (23) hergestellt ist.
